# FASCICULE DE BREVET EUROPEEN

(11) **EP 0 356 354 B1**
(45) Date de publication et mention de la délivrance du brevet: **27.10.1993**
(21) Numéro de dépôt: 89420306.6
(22) Date de dépôt: 21.08.1989
(51) Int. Cl.: A01N 25/10

(54) **Compositions solides silicones à action biologique agricole**
Feste Silikonzusammensetzungen mit landwirtschaftlicher biologischer Wirkung
Solid silicone compositions having an agricultural biological activity

(30) Priorité: 24.08.1988 FR 8811346
(43) Date de publication de la demande: 28.02.1990
(73) Titulaire: RHONE-POULENC AGROCHIMIE, 69009 Lyon (FR)
(72) Inventeur: Torres, Ghislaine, F-69000 Lyon (FR); Porte, Hugues, F-69300 Caluire (FR); Laforest, Jean, F-69450 Saint Cyr au Mont d'Or (FR)
(74) Mandataire: Chrétien, François

(56) Documents cités:
- DE-A- 2 919 338
- FR-A- 2 249 857

## Description

La présente invention concerne des compositions solides à base de silicone à action biologique agricole, leur préparation et leur utilisation pour le traitement des plantes.

Le traitement des plantes et notamment des cultures pour favoriser leur croissance nécessite souvent la possibilité de relarguer les matières à action biologique progressivement sur ou vers les plantes à partir d'un support solide. De nombreuses techniques ont été proposées associant une matière polymère et certaines matières actives notamment agrochimiques ou engrais. En fait ces techniques ont trouvé des applications pratiques limitées ou n'ont pas trouvé de débouché suffisant en raison de plusieurs inconvénients dont le principal est la difficulté de régler la cinétique de libération de la matière active et par conséquent d'obtenir à coup sûr un effet déterminé pour une teneur en matière active donnée,en particulier lorsque la libération de la matière active doit se faire dans un milieu non liquide notamment solide, de préférence le sol ou en milieu gazeux humide par exemple l'air ambiant.

D'autres inconvénients résident également dans l'inocuité insuffisante des polymères pour les plantes à traiter et l'environnement, ainsi que leur coût et leur mise en oeuvre.

La présente invention a pour but de pallier ces inconvénients et de fournir des compositions à action biologique progressive permettant la libération de matières actives agricoles dans un milieu non liquide notamment solide, de préférence le sol, ou dans un milieu gazeux en particulier l'air ambiant de manière contrôlée et à faible coût, et sans inconvénient pour les plantes à traiter et l'environnement.

Plus précisément l'invention concerne des compositions solides à base de polymère, à action biologique agricole pour favoriser la croissance des plantes, caractérisée en ce qu'elle est constituée d'une quantité majoritaire d'une matière silicone réticulée ou non, perméable à la vapeur d'eau et d'une quantité minoritaire d'une matière active à action biologique agricole sous forme hydrosoluble, dispersée de façon homogène dans la matière silicone, et sans effet d'utilisation sur la réticulation du silicone, la matière silicone et la forme hydrosoluble de la matière active étant telles que la cinétique de libération,dans un milieu non liquide notamment solide, de préférence le sol, ou dans un milieu gazeux humide de préférence une atmosphère humide, de la matière active par la matrice silicone est sensiblement d'ordre zéro.

L'invention concerne plus particulièrement des compositions du type ci-dessus caractérisées en ce que la matière active est présente à raison de 5 à 50, de préférence de 15 à 40,parties en volume pour 100 parties en volume d'organopolysiloxanne de départ.

Comme silicones utilisables comme matières dans les compositions selon l'invention, on peut citer plusieurs groupes.

Un premier groupe comprend des compositions de silicone comportant (A) une gomme diorganopolysiloxane, (B) une charge renforçante (B₁), de préférence siliceuse, et/ou un peroxyde organique (B₂).

Des compositions préférées comportent :
- - (A) :: 100 parties en poids d'une gomme diorganopolysiloxane ayant une viscosité supérieure à 1 million mPa.s à 25°C,
- - (B) :: 5 à 130 parties en poids d'une charge siliceuse renforçante (B₁) choisie parmi les silices de pyrogénation et les silices de précipitation.

De manière avantageuse la gomme (A) a pour formule générale R₃₋ₐ(R′O)ₐSiO(R₂SiO)ₙSi(OR′)ₐR₃₋ₐ dans laquelle les symboles R, identiques ou différents, représentent des radicaux hydrocarbonés en C₁-C₈, subsitutés ou non par des atomes d'halogène, des radicaux cyano ; le symbole R′ représente un atome d'hydrogène, un radical alkyle en C₁-C₄, le symbole a représente zéro représentent des radicaux hydrocarbonés en C₁-C₈, subsitutés ou non par des atomes d'halogène, des radicaux cyano ; le symbole R′ représente un atome d'hydrogène, un radical alkyle en C₁-C₄, le symbole a représente zéro ou un, le symbole n représente un nombre ayant un valeur suffisante pour obtenir une viscosité d'au moins 1 Million de mPa.s à 25°C, au moins 50 % en nombre de radicaux représentés par R sont des radicaux méthyle.

De préférence 0,005 à 0,5 mole % des motifs R₂SiO entrant dans la constitution de la gomme (A) sont choisis parmi ceux de formules (CH₂=CH)(R)SiO et (CH₂=CH)R₂₋ₐ(RO′)ₐSi_{0,5}.

La gomme (A) de viscosité d'au moins 1 Million de mPa.s à 25°C, de préférence d'au moins 2 Millions de mPa.s à 25°C, est constituée, le long de sa chaîne, de motifs R₂SiO et elle est bloquée à chaque extrémité de sa chaîne par un motif R₃₋ₐR(O)ₐSiO_{0,5} ; cependant la présence en mélange avec des motifs, de motifs de structure différente, par exemple de formule RSiO_{1,5} et SiO₂, n'est pas exclue dans la proportion d'au plus 2 % par rapport au nombre total des motifs R₂SiO et R₃₋ₐ(RO′)ₐSiO_{0,5}.

Le symbole R représente un radical hydrocarboné en C₁-C₈ substitué ou non par des atomes d'halogène, des radicaux cyano ; il englobe plus spécifiquement :
- des radicaux alkyle en C₁-C₅, substitué ou non par des atomes d'halogène, des radicaux cyano, tels que les radicaux méthyle, éthyle, propyle, isopropyle, butyle, isobutyle, pentyle, trifluoro-3,3,3 propyle, beta-cyanoéthyle, gamma-cyanopropyle,
- des radicaux alcényles en C₂-C₄ tels que les radicaux vinyle, allyle, butène-2 yle,
- des radicaux aryle mononucléaire en C₆-C₈, substitués ou non par des atomes d'halogène tels que les radicaux phényle, chlorophényle, tolyle, trifluorométhylphényle.

Les radicaux alkyle en C₁-C₄, représentés par le symbole R′, concernent plus spécifiquement les radicaux méthyle, éthyle, propyle, isopropyle, butyle, butyle secondaire.

Au moins 50 % en nombre, de préférence au moins 70%, des radicaux représentés par R sont des radicaux méthyle.

Par ailleurs des radicaux vinyle sont de préférence également présents, en quantité appropriée, dans la gomme (A) ; ils conduisent à des motifs de formule CH₂=CH(R)SiO et CH₂=CH(R₂₋ₐ)(RO′)ₐSiO_{0,5} dont le nombre représente 0,005 à 0,5 mole %, de préférence 0,01 à 0,45 mole %, de l'ensemble des motifs de formules générales R₂SiO et R₃₋ₐ(RO′)ₐSiO_{0,5}, entrant dans la constitution de la gomme (A).

A titre d'exemples concrets de motifs constituant les gommes (A) peuvent être cités ceux de formules :

(CH₃)₂SiO, CH₃(CH₂=CH)SiO, CH₃(C₆H₅)SiO,

(C₆H₅)₂SiO, CH₃(C₂H₅)SiO,

CH₃CH₂-CH₂(CH₃)SiO, CH₃(n.C₃H₇)SiO,

(CH₃)₃SiO_{0,5}, (CH₃)₂CH₂=CHSiO_{0,5},

CH₃(C₆H₅)₂SiO_{0,5},

CH₃(C₆H₅)(CH₂=CH)SiO_{0,5}, HO(CH₃)₂SiO_{0,5},

CH₃O(CH₃)₂SiO_{0,5}, C₂H₅O(CH₃)₂SiO_{0,5},

n.C₃H₇O(CH₃)₂SiO_{0,5}, HO(CH₂=CH)(CH₃)SiO_{0,5}.

Les gommes (A) sont commercialisées par les fabricants de silicones, d'autre part elles peuvent être aisément fabriquées en mettant en oeuvre des techniques abondamment décrites dans la littérature chimique.

Dans la majorité des cas, on utilise des gommes méthylvinyldiméthylpolysiloxanes possédant le long de leur chaîne des motifs (CH₃)₂SiO et CH₂=CH(CH₃)SiO et, à l'extrémité de leur chaîne, des motifs choisis parmi ceux de formules :

(CH₃)₂(CH₂=CH)SiO_{0,5}, HO(CH₃)(CH₂=CH)SiO_{0,5},

(CH₃)₃SiO_{0,5}, C₆H₅(CH₃)(CH₂=CH)SiO_{0,5},

HO(CH₃)₂SiO_{0,5},

ou des gommes diméthylpolysiloxanes bloquées à chaque extrémité de leur chaîne par l'un des motifs précédents renfermant un radical vinyle.

Elles présentent généralement une viscosité d'au moins 2 Millions de mPa.s à 25°C.

Les charges (B₁) qui sont de préférence des silices renforçantes sont utilisées à raison de 5 à 130 parties des gommes diorganopolysiloxanes (A). Elles sont choisies parmi les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1, µm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les composition selon l'invention,c'est à dire les compositions silicones du premier groupe (soit A + B) mélangées à la matière active C peuvent être malaxées à froid telles quelles et être extrudées sous les formes les plus variées. Les formes de compositions de silicone obtenues peuvent être découpées à la longeur désirée de manière à ce que la forme coupée comporte une quantité suffisante en équivalent de matière active pour un relargage pendant la durée souhaitée.

De façon surprenante on a découvert que ces compositions de silicone non réticulées ont des caractéristiques physiques suffisantes pour les applications envisagées.
Dans le cadre de la présente invention, on peut utiliser en plus de (B₁) ou à la place de (B₁) un peroxyde organique (B₂). Il est alors nécessaire de réticuler à chaud la composition élastomère.

Les peroxydes organiques (B₂) sont utilisées à raison de 0,1 à 6 parties, de préférence 0,2 à 5 parties, pour 100 parties des gommes (A). Ils sont bien connus des techniciens et comprennent plus spécialement le péroxyde de benzoyle, le peroxyde de dichloro-2,4 benzoyle, le peroxyde de dicumyle, le bis(t-butylperoxy)2,5 diméthyl-2,5 hexane, le perbenzoate de t-butyle, le carbonate de peroxy t-butyle et d'isopropyle, le peroxyde de di-t-butyle, le bis(t-butylperoxy)-1,1 triméthyl-3,3,5 cyclohexane.

Ces divers peroxydes se décomposent à des températures et à des vitesses parfois différentes. Ils sont choisis en fonction des conditions de durcissement exigées.

Les compositions de silicone selon l'invention peuvent comporter en outre, pour 100 parties de gomme (A) de 0,1 à 6 parties d'un agent de texturation (D) qui est un polymère organofluoré sous forme d'un solide pulvérulent.

Les polymères fluorés (D) sont utilisés à raison de 0,1 à 6 parties, de préférence 0,15 à 5 parties, pour 100 parties des gommes diorganopolysiloxanes (A). Ces composés sont bien connus des techniciens ; ils sont préparés par polymérisation ou copolymérisation de monomères choisis par exemple dans le groupe du tétrafluoroéthylène, du chlorotrifluoroéthylène, du fluorure de vinylidène, de l'hexafluoropropène. Ce sont donc des polymères ou des copolymères constitués de motifs dérivés des monomères précédents ; ainsi sont utilisables des polytétrafluoroéthylènes, les copolymères binaires du type polytétrafluoroéthylène-beta-fluoropropène, ou du type fluorure de vinylidène-hexafluoropropène, les copolymères ternaires du type fluorure de vinylidène-hexafluoropropène-tétrafluoroéthylène.

Ces composés peuvent être introduits dans les compositions de l'invention sous la forme de poudres de diamètre particulaire moyen inférieure à 100 micromètres, par exemple de diamètre allant de 25 à 65 micromètres.

De préférence, quand on utilise les agents de réticulation (B₂), on peut remplacer jusqu'à 90 % en poids des silices de renforcement (B₁) par des charges semi-renforçantes ou de bourrage, dont le diamètre particulaire est supérieur à 0,1 um, telles que le quartz broyé, les argiles calcinées et les terres de diatomées.

Les compositions de silicones peuvent comporter en outre de 1 à 10 parties d'huile diméthylpolysiloxanes (E) à extrémités silanol de viscosité à 25°C comprise entre 10 et 5 000 mPa.s, de préférence de 30 à 1000 mPa.s, pour 100 parties de gomme (A). Leur utilisation est surtout recommandée lorsque les quantités de charges renforçantes (B₁) sont élevées.

La préparation des compositions conformes à l'invention s'effectue à l'aide de moyens mécaniques connus, par exemples de pétrins, de mélangeurs à cylindres, de mélangeurs à vis.

Les divers constituants sont incorporés dans ces appareils dans un ordre pouvant être quelconque. Il est toutefois recommandé de charger la gomme (A), puis dans l'ordre les charges siliceuses (B₁) et la matière active (C), éventuellement l'additif (E) et, en dernier lieu, le composé (D) et (B₂).

Les compositions obtenues sont stables au stockage ; par ailleurs, elles se moulent et s'extrudent aisément ce qui permet de réaliser des formes très variées. Celles qui contiennent du péroxyde (B₂) sont réticulées par chauffage. La durée du chauffage varie évidemment avec la température, la pression et la nature des réticulants. Elle est généralement de l'ordre de plusieurs minutes vers 150-250°C et de quelques secondes vers 250-350°C.

Les élastomères ainsi formés peuvent être éventuellement post-chauffés ultérieurement, surtout ceux obtenus par moulage pendant une période d'au moins une heure à une température comprise entre 190 et 270°C dans le but d'achever leur réticulation.

Néanmoins, ces élastomères possèdent dès la fin de leur première phase de réticulation, c'est à dire avant la phase éventuelle de post-chauffage, des caractéristiques physiques suffisantes pour l'application envisagée.

Les compositions de silicones éventuellement réticulées se présentent avantageusement sous formes solides variées. Pour une présentation donnée, on détermine la quantité de matière active et la durée de relargage.

Un second groupe de silicones utilisables selon l'invention comprend des compositions de silicone vulcanisables de préférence à chaud comportant :
(A) une gomme diorganopolysiloxane présentant, par molécule au moins deux groupes vinyle liés au silicium et une viscosité à 25°C d'au moins 500 000 mPa.s,
(B) au moins un organohydrogénopolysiloxane présentant par molécule au moins trois atomes d'hydrogène liés au silicum,
(C) une charge renforçante, et
(D) une quantité catalytiquement efficace d'un catalyseur qui est un composé d'un métal du groupe du platine.

Plus précisémment la présente invention concerne une composition de silicone comportant :
- - (A) :: 100 parties d'une gomme diorganopolysiloxane présentant par molécule au moins deux groupes vinyle liés au silicium et une viscosité à 25°C d'au moins 500 000 mPa.s,
- - (B) :: au moins un organohydrogénopolysiloxane présentant par molécule au moins 3 atomes d'hydrogène, liés au silicium, en quantité telle que le rapport en nombre des fonctions hydrure de (B) sur les groupes vinyle de (A) soit compris entre 0,4 et 10,
- - (C) :: 5 à 130 parties d'une charge renforçante de préférence siliceuse choisie parmi les silices de pyrogénation et les silices de précipitation, et
- - (D) :: une quantité catalytiquement efficace d'un catalyseur qui est un composé d'un métal du groupe du platine.

Le rapport en nombre des fonctions hydrures de (B) sur les fonctions vinyle de (A) peut être très variable. Il est généralement compris entre 0,4 et 10, de préférence entre 1,1 et 4.

Plus particulièrement la gomme diorganopolysiloxane (A) a pour formule générale R₃₋ₐ(R′O)ₐSiO(R₂SiO)ₙSi(OR′)ₐR₃₋ₐ dans laquelle les symboles R, identiques ou différents, représentent des radicaux hydrocarbonés en C₁-C₈, substitués ou non par des atomes d'halogène, des radicaux cyano ; le symbole R′ représente un atome d'hydrogène, un radical alkyle en C₁-C₄, le symbole a représente zéro ou un, le symbole n représente un nombre ayant une valeur suffisante pour obtenir une viscosité d'au moins 500 000 mPa.s à 25°C, au moins 50 % en nombre de radicaux représentés par R sont des radicaux méthyle.

De préférence 0,005 à 0,5 mole % des motifs entrant dans la constitution de la gomme (A) sont choisis parmi ceux de formules (CH₂=CH)(R)SiO et/ou (CH₂=CH)R₂₋ₐ(RO′)ₐSi_{0,5}.

La gomme (A) de viscosité d'au moins 500 000 mPa.s à 25°C, de préférence d'au moins 1 Million de mPa.s à 25°C, est constituée, le long de sa chaîne, de motifs R₂SiO et elle est bloquée à chaque extrémité de sa chaîne par un motif R₃₋ₐR(O)ₐSiO_{0,5} ; cependant la présence en mélange avec ces motifs, de motifs de structure différente, par exemple de formule RSiO_{1,5} et SiO₂, n'est pas exclue dans la proportion d'au plus 2 % par rapport au nombre total des motifs R₂SiO et R₃₋ₐ(RO′)ₐSiO_{0,5}.

Le symbole R représente un radical hydrocarboné en C₁-C₈ substitué ou non par des atomes d'halogène, des radicaux cyano ; il englobe plus spécifiquement :
- des radicaux alkyle en C₁-C₅, substitués ou non par des atomes d'halogène, des radicaux cyano, tels que les radicaux méthyle, éthyle, propyle, isopropyle, butyle, isobutyle, pentyle, trifluoro-3,3,3 propyle, beta-cyanoéthyle,gamma-cyanopropyle,
- des radicaux alcényle en C₂-C₄ tels que les radicaux vinyle, allyle, butène-2 yle,
- des radicaux aryle mononucléaire en C₆-C₈, substitués ou non par des atomes d'halogènes tels que les radicaux phényle, chlorophényle, tolyle, trifluorométhylphényle.

Les radicaux alkyle en C₁-C₄, représentés par le symbole R′, concernent plus spécifiquement les radicaux méthyle, éthyle, propyle, isopropyle, butyle, butyle secondaire.

Au moins 50 % en nombre, de préférence au moins 70 % des radicaux R sont des radicaux méthyle.

Par ailleurs des radicaux vinyle sont de préférence également présents, en quantité appropriée, dans la gomme (A) ; ils conduisent à des motifs de formule CH₂=CH(R)SiO etCH₂=CH(R₂₋ₐ)(RO′)ₐSiO_{0,5} dont le nombre représente 0,005 à 0,5 mole %, de préférence 0,01 à 0,45 mole %, de l'ensemble des motifs de formules générales R₂SiO et R₃₋ₐ(RO′)ₐSiO_{0,5}, entrant dans la constitution de la gomme (A).

A titre d'exemples concrets de motifs constituant les gommes (A) peuvent être cités ceux de formules :

(CH₃)₂SiO, CH₃(CH₂=CH)SiO, CH₃(C₆H₅)SiO,

(C₆H₅)₂SiO, CH₃(C₂H₅)SiO,

CH₃CH₂-CH₂(CH₃)SiO, CH₃(n.C₃H₇)SiO,

(CH₃)₃SiO_{0,5}, (CH₃)₂(CH₂=CH)SiO_{0,5},

CH₃(C₆H₅)₂SiO_{0,5},

CH₃(C₆H₅)(CH₂=CH)SiO_{0,5}, HO(CH₃)₂SiO_{0,5},

CH₃O(CH₃)₂SiO_{0,5}, C₂H₅O(CH₃)₂SiO_{0,5},

n.C₃H₇O(CH₃)₂SiO_{0,5}, HO(CH₂=CH)(CH₃)SiO_{0,5}.

Les gommes (A) sont commercialisées par les fabricants de silicones, d'autre part elles peuvent être aisément fabriquées en mettant en oeuvre des techniques abondamment décrites dans la littérature chimique.

Dans la majorité des cas, on utilise des gommes méthylvinyldiméthylpolysiloxanes possèdant le long de leur chaîne des motifs (CH₃)₂SiO et CH₂=CH(CH₃)SiO et à l'extrémité de leur chaîne des motifs choisis parmi ceux de formules :

(CH₃)₂(CH₂=CH)SiO_{0,5}, HO(CH₃)(CH₂=CH)SiO_{0,5},

(CH₃)₃SiO_{0,5}, C₆H₅(CH₃)(CH₂=CH)SiO_{0,5},

HO(CH₃)₂SiO_{0,5},

ou des gommes diméthylpolysiloxanes bloquées à chaque extrémité de leur chaîne par l'un des motifs précédents renfermant un radical vinyle.

Elles présentent généralement une viscosité d'au moins 2 Millions de mPa.s à 25°C.

L'organohydrogénopolysiloxane (B) présente un motif siloxane de formule générale moyenne : 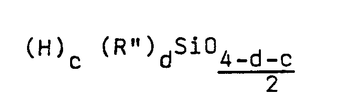
dans laquelle R˝ représente des radicaux méthyle, phényle et vinyle, 50 % au moins de ces radicaux étant des radicaux méthyle, c représente un nombre quelconque de 0,01 à 1 inclus et d représente un nombre quelconque de 0,01 à 2 inclus.

Ces organohydrogénopolysiloxanes (B) sont choisis parmi les polymères linéaires, ramifiés ou cycliques, constitués de motifs choisis parmi ceux de formules :

R˝₂SiO, H(R˝)SiO, H(R˝)₂SiO_{0,5}, HSiO_{1,5}, R˝SiO_{1,5} SiO₂, R˝SiO_{0,5}.

Ils peuvent être liquides, gommeux ou résineux. Ils renferment au moins 3SiH par molécule.

Des exemples concrets de produits (B) abondamment cités dans la littérature sont décrits en détail dans les brevets américains US-A-3 220 972, US-A-3 284 406, US-A-3 436 366, et US-A-3 697 473 cités comme références.

Les charges (C) qui sont de préférence des silices renforçantes sont utilisées à raison de 5 à 130 parties des gommes diorganopolysiloxanes (A). Elles sont choisies parmi les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1, um (micromètre) et une densité apparente inférieure à 200 g/litre.

Ces silices peuvent être incorporées telles quelles ou aprés avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Il est souhaitable d'ajouter une quantité catalytiquement efficace d'un catalyseur (D) d'hydrosilylation qui est un composé un groupe du platine, de préférence le platine à la dose de 0,001 à 1 %, de préférence de 0,05 à 0,5 % calculés en poids de métal catalytique par rapport au poids de la gomme (A) et de l'organohydrogénopolysiloxane (B).

Tous les composés du platine abondamment décrits dans la littérature comme catalyseurs d'hydrosilylation sont utilisables, en particulier l'acide chloroplatinique H₂PtCl₆, les produits de réaction de l'acide chloroplatinique avec des alcools, des éthers ou des aldéhydes (brevet américain US-A-3 220 972) et les produits de réaction de l'acide chloroplatinique avec des vinylpolysiloxanes, traités ou non par un agent alcalin pour éliminer au moins partiellement les atomes de chlore (brevets américains US-A-3 419 593, US-A-3 775 452 et US-A-3 814 730).

On peut remplacer jusqu'à 90 % en poids des silices de renforcement (C) par des charges semi-renforçantes ou de bourrage, dont le diamètre particulaire est supérieur à 0,1 um, telles que le quartz broyé, les argiles calcinées et les terres de diatomées.

Les compositions de silicones peuvent comporter en outre de 1 à 10 parties d'huiles diméthylpolysiloxanes (F) à extrémités silanol de viscosité à 25°C comprise entre 10 et 5 000 mPa.s, de préférence de 30 à 1000 mPa.s, pour 100 parties de gomme (A). Leur utilisation est surtout recommandée lorsque les quantités de charges renforçantes (C) sont élevées.

La préparation des compositions conformes à l'invention s'effectue à l'aide de moyens mécaniques connus, par exemples de pétrins, de mélangeurs à cylindres, de mélangeurs à vis.

Les divers constituants sont incorporés dans ces appareils dans un ordre pouvant être quelconque. Il est toutefois recommandé de charger la gomme (A), puis dans l'ordre les charges siliceuses (C) et la matière active (E), éventuellement l'additif (F) et, en dernier lieu, le composé (D). Si la composition doit être stockée avant son extrusion et/ou moulage, il est souhaitable d'ajouter une quantité efficace d'un inhibiteur de l'action catalytique du platine qui disparait à chaud lors de la vulcanisation de la composition. On peut ainsi utiliser comme inhibiteur, en particulier les amines organiques, les silazanes, les oximes organiques, les diesters de diacides carboxyliques, les cétones acétyléniques, les vinylméthylcyclopolysiloxanes (voir notamment US-A-3 445 420 et US-A-3 989 667). L'inhibiteur est utilisé à raison de 0,005 à 5 parties, de préférence 0,01 à 3 parties pour 100 parties de constituant (A).

Les compositions obtenues se moulent et s'extrudent aisément ce qui permet de réaliser des formes très variées. Elles sont en outre durcissables en élastomères par chauffage sous pression ou à l'air ambiant à des températures de l'ordre de 100 à 350°C. La durée du chauffage varie évidemment avec la température, la pression et la nature des réticulants. Elle est généralement de l'ordre de plusieurs minutes vers 150-250°C et de quelques secondes vers 250-350°C.

Les élastomères ainsi formés peuvent être éventuellement post-chauffés ultérieurement, surtout ceux obtenus par moulage pendant une période d'au moins une heure à une température comprise entre 190 et 270°C dans le but d'achever leur réticulation.

Néanmoins, ces élastomères possèdent dès la fin de leur première phase de réticulation, c'est à dire avant la phase éventuelle de post-chauffage, des caractéristiques physiques suffisantes pour l'application envisagée.

Ainsi les compositions selon l'invention peuvent être malaxées à froid telles quelles et être extrudées et/ou moulées puis vulcanisées sous les formes les plus variées.

Un troisième groupe de silicones utilisables selon l'invention comprend des compositions diorganopolysiloxanes durcissables en un élastomère de silicone par des réaction de polycondensation comportant :
- - (A) :: au moins une huile diorganopolysiloxane portant à chaque extrémité de la chaîne au moins deux groupes condensables ou hydrolysables, ou un seul groupe hydroxy,
- - (B) :: un catalyseur de polycondensation de l'huile,
- - (C) :: un silane comportant au moins trois groupes condensables ou hydrolysables, quand (A) est une huile à extrémités hydroxy.

Dans ce qui suit ou ce qui précède, sauf mentions contraires, les pourcentages et parties sont en poids.

Les huiles diorganopolysiloxanes (A) utilisables dans les compositions selon l'invention sont plus particulièrement celles répondant à la formule (1) :

YₙSi₃₋ₙO(SiR₂O)ₓSiR₃₋ₙYₙ (1)

dans laquelle :
R représente des radicaux hydrocarbonés monovalents identiques ou différents, Y représente des groupes hydrolysables ou condensables identiques ou différents, ou des groupes hydroxy,
n est choisi parmi 1, 2 et 3 avec n = 1, quand Y est un hydroxy, et x est un nombre entier supérieur à 1, de préférence supérieur à 10.

La viscosité des huiles de formule (1) est comprise entre 50 et 10⁶ mPa.s à 25°C. Comme exemple de radicaux R on peut citer les radicaux alkyle ayant de 1 à 8 atomes de carbone tels que méthyle, éthyle, propyle, butyle, hexyle et octyle, les radicaux vinyle, les radicaux phényle. Comme exemples de radicaux R substitués on peut citer les radicaux trifluoro-3,3,3 propyle, chlorophényle et betacyanoéthyle.

Dans les produits de formule (1) généralement utilisés industriellement, au moins 60 % en nombre des radicaux R sont des radicaux méthyle, les autres radicaux étant généralement des radicaux phényle et/ou vinyle.

Comme exemple de groupe Y hydrolysables on peut citer les groupes amino, acylamino, aminoxy, cétiminoxy, iminoxy, énoxy, alcoxy, alcoxy-alkylène-oxy, acyloxy et phosphato.

Comme exemples de groupes Y amino, on peut citer les groupes n-butylamino, sec-butylamino et cyclohexylamino, des groupes acylamino N substitué, on peut citer le groupe benzoyl-amino, de groupes aminoxy les groupes diméthylaminoxy, diéthylaminoxy, dioctylaminoxy et diphénylaminoxy, comme exemples de groupes Y iminoxy et cétiminoxy, ceux dérivés de l'acétophénone-oxime, l'acétone-oxime, la benzophénone-oxime, la méthyl-éthyl cétoxime, la diisopropylcétoxime et la chlorocyclohexanone-oxime.

Comme groupes Y alcoxy on peut citer les groupes ayant de 1 à 8 atomes de carbone comme les groupes méthoxy, propoxy, isopropoxy, butoxy, hexyloxy et octyloxy, comme groupe Y alcoxy-alkylène-oxy on peut citer le groupe méthoxy-éthylène-oxy.

Comme groupes Y acyloxy, on peut citer les groupes ayant de 1 à 8 atomes de carbone comme les groupes formyloxy, acétoxy, propionyloxy et éthyl-2 hexanoyloxy.

Comme groupe Y phosphato, on peut citer ceux dérivant des groupes phosphate de diméthyle, phosphate de diéthyle et phosphate de dibutyle.

Comme groupe Y condensables, on peut citer les atomes d'hydrogène et les atomes d'halogène, de préférence le chlore.

Quand dans la formule (1) ci-dessus les groupes Y sont des groupes hydroxy, n est alors égal à 1, il est nécessaire, pour préparer des élastomères polyorganosiloxanes à partir des polymères de formule (1) ci-dessus, d'utiliser, en plus des catalyseurs de condensation, des agents réticulants (D) déjà indiqués qui sont des silanes de formule générale :

R₄₋ₐSi Y′ₐ (2)

dans laquelle R a les significations données plus haut à la formule (1) et Y′ représente des groupes hydrolysables ou condensables, identiques ou différents,
a est égal à 3 ou 4.

Les exemples donnés pour les groupes Y sont appliquables aux groupes Y′.

Il est souhaitable d'utiliser des silanes de formule (2) même dans le cas où l'huile (A) Y n'est pas un groupe hydroxy.

Dans ce cas il est souhaitable d'utiliser des groupes Y de l'huile (A) identiques aux Y′ du silane (D).

Les diorganopolysiloxanes alpha-oméga dihydroxylés de formule (1) sont généralement des huiles dont la viscosité varie de 500 mPa.s à 25°C à 500 000 mPa.s à 25°C, de préférence 800 mPa.s à 400 000 à 25°C, ce sont des polymères linéaires constitués essentiellement de motifs diorganosiloxyles de formule (R₂SiO). Toutefois la présence d'autres motifs, présents, généralement à titre d'impuretés, tels que R SiO_{3/2}, R SiO_{1/2} et SiO_{4/2} n'est pas exclue dans la proportion d'au plus 1 % par rapport au nombre de motifs diorganosiloxyles.

Les radicaux organiques, liés aux atomes de silicium des huiles de base, représentés par le symbole R, peuvent être choisis parmi les radicaux alkyles ayant de 1 à 3 atomes de carbone tels que les radicaux méthyle, éthyle, n-propyle, le radical vinyle, le radical phényle, le radical trifluoro-3,3,3 propyle et le radical betacyanoéthyle.

Au moins 60 % de l'ensemble des radicaux R sont des radicaux méthyle, au plus 1 % sont des radicaux vinyle.

A titre illustratif de motifs représentés par la forume R₂SiO peuvent être cités ceux de formules :

(CH₃)₂SiO ; CH₃(CH₂=CH)SiO ; CH₃(C₆H₅)SiO ;

CF₃CH₂CH₂(CH₃)Sio ; NC-CH₂CH₂(CH₃)SiO ;

NC-CH₂(C₆H₅)SiO ;

Ces huiles de base sont, dans leur grande majorité, commercialisées par les fabricants de silicones. D'autre part leurs techniques de fabrication sont bien connues, on les trouve décrites par exemple dans les brevets français FR-A-1 134 005, FR-A-1 198 749, FR-A-1 226 745.

Comme exemples de silanes monomères (D) de formule (2) on peut citer plus particulièrement les polyacyloxysilanes, les polyalcoxysilanes, les polycétiminoxysilanes et les polyiminoxysilanes et en particulier les silanes suivants :

CH₃Si(OCOCH₃)₃ ; C₂H₅Si(OCOCH₃)₃ ;

(CH₂ = CH)Si(OCOCH₃)₃ ; C₆H₅Si(OCOCH₃)₃ ;

CF₃CH₂CH₂Si(OCOCH₃)₃;NC-CH₂CH₂Si(OCOCH₃)₃;

CH₂ClSi(OCOCH₂CH₃)₃;

CH₃Si(ON=C(CH₃)C₂H₅)₂OCH₂CH₂OCH₃ ;

CH₃Si(ON=CH-CH₃)₂OCH₂CH₂OCH₃.

Les silanes (D) ci-dessus associés à des polydiorganosiloxanes alpha-oméga dihydroxylés de formule (1) peuvent être utilisés en compositions monocomposantes stables à l'abri de l'air.

Comme exemples de silane monomère de formule (2) qui, associés à des polydiorganosiloxanes alpha-oméga dihydroxylés de formule (1), peuvent être utilisés avantageusement en compositions bi-composantes, on peut citer les polyalcoxysilanes et en particulier ceux de formules :

Si(OC₂H₅)₄;Si(O-n-C₃H₇)₄;Si(O-isoC₃H₇)₄ ;

Si(OC₂H₄OCH₃)₄;CH₃Si(OCH₃)₃ ;

CH₂=CHSi(OCH₃)₃ ; CH₃Si(OC₂H₄OCH₃)₃ ;

ClCH₂Si(OC₂H₅)₃ ; CH₂ = CHSi(OC₂H₄OCH₃)₃.

A tout ou partie des silanes monomères ci-dessus décrits on peut substituer des polyalcoxypolysiloxanes dont chaque molécule compte au moins deux, de préférence trois atomes Y′, les autres valences du silicium sont satisfaites par des liaison siloxaniques SiO- et SiR. Comme exemples d'agents réticulants polymères on peut citer le polysilicate d'éthyle.

On utilise généralement de 0,1 à 20 parties en poids d'agent réticulant de formule (2) pour 100 parties en poids de polymère de formule (1).

Les compositions polyorganosiloxanes durcissables en élastomère du type décrit ci-dessus comportent de 0,001 à 10 parties en poids, de préférence de 0,05 à 3 parties en poids de catalyseur de condensation (C) pour 100 parties en poids de polysiloxane de formule (1).

La teneur en catalyseur de condensation des compositions mono-composantes est généralement beaucoup plus faible que celle utilisée dans les compositions bi-composantes et est généralement comprise entre 0,001 et 0,05 parties en poids pour 100 parties en poids de polysiloxane de formule (2).

Les agents réticulants (D) de formule (2), qu'ils soient utilisables pour la préparation des compositions monocomposantes ou bicomposantes, sont des produits accessibles sur le marché des silicones, de plus leur emploi dans les compositions durcissant dès la température ambiante est connu, il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Les compositions selon l'invention peuvent comporter en outre des charges (E) renforçantes ou semi-renforçantes ou de bourrage qui sont de préférence choisies parmi les charges siliceuses, les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1, um (micromètre) et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les charges semi-renforçantes ou de bourrage ont un diamètre particulaire supérieur à 0,1 um et sont choisies parmi le quartz broyé, les argiles calcinées et les terres de diatomées.

On peut généralement utiliser de 0 à 100 parties, de préférence de 5 à 50 parties de charge (E) pour 100 parties d'huile (A).

Les bases de compositions de silicone définies de façon générale ci-dessus sont bien connues de l'homme de métier. Elles sont décrites en détail dans la littérature en particulier dans de nombreux brevets et la plupart sont disponibles dans le commerce.

Ces compositions réticulent à température ambiante en présence d'humidité apportée par l'humidité de l'air et/ou contenue dans la composition. Elles se divisent en deux grandes familles. La première famille est constituée par les compositions mono-composantes ou à un seul emballage stables au stockage à l'abri de l'humidité de l'aire et durcissant en élastomère à l'humidité de l'air. Dans ce cas le catalyseur de condensation (C) utilisé est un composé métallique généralement un composé de l'étain, du titane ou du zirconium.

Selon la nature des groupements condensables ou hydrolysables ces compositions mon-composantes sont dites acides, neutres, ou basiques.

Comme compositions acides, on peut citer par exemple les compositions décrites dans les brevets US-A-3 035 016, US-A-3 077 465, US-A-3 133 891, US-A-3 409 573, US-A-3 438 930, US-A-3 647 917 et US-A-3 886 118.

Comme compositions neutres, on peut utiliser par exemple les compositions décrites dans les brevets US-A-3 065 194, US-A-3 542 901, US-A-3 689 454, US-A-3 779 986, GB-A-2 052 540, US-A-4 417 042 et EP-A-69 256.

Comme compositions basiques on peut par exemple utiliser les compositions décrites dans les brevets US-A-3 378 520, US-A-3 364 160, US-A-3 417 047, US-A-3 464 951, US-A-3 742 004 et US-A-3 758 441.

On peut également utiliser selon une variante préférée les compositions coulantes mono-composantes telles que celles décrites dans les brevets US-A-3 922 246, US-A-3 956 280 et US-A-4 143 088.

La deuxième famille qui est la famille préféree dans le cadre de la présente invention est constituée par les compositions à deux composantes ou à deux emballages comportant généralement une huile (A) alpha-oméga-dihydroxydiorganopolysiloxane, un silane (D) ou un produit provenant de l'hydrolyse partielle de ce silane, et un catalyseur (C) qui est un composé métallique de préférence un composé de l'étain et/ou une amine.

Des exemples de telles compositions sont décrits dans les brevets US-A-3 678 002, US-A-3 888 815, US-A-3 933 729, US-A-4 064 096 et GB-A-2 032 936.

Parmi ces compositions on préfère plus particulièrement les compositions bi-composantes comportant :
- - (A) :: 100 parties d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, jusqu'à 20 % en nombre étant des radicaux phényle, au plus 2 % étant des radicaux vinyle,
- - (C) :: 0,01 à 1 partie (calculée en poids d'étain métal) d'un composé catalytique de l'étain,
- - (D) :: 0,5 à 15 parties d'un polyalcoxysilane ou polyalcoxysiloxane,
- - (E) :: 0 à 100 parties, de préférence 5 à 50 parties de charge minérale siliceuse.

Les catalyseurs (C) à l'étain sont abondamment décrits dans la littérature ci-dessus, ce peut être en particulier un sel d'étain d'un acide mono- ou dicarboxylique. Ces carboxylates d'étain sont décrits notamment dans l'ouvrage de NOLL (Chemistry and Technology of Silicones, page 337, Academic Press, 1968, 2ème édition). On peut en particulier citer le naphténate, l'octanoate, l'oléate, le butyrate, le dilaurate de dibutylétain, le diacétate de dibutylétain.

On peut également utiliser comme composé catalytique à l'étain le produit de réaction d'un sel d'étain, en particulier d'un dicarboxylate d'étain sur du polysilicate d'éthyle comme décrit dans le brevet US-A-3 186 963. On peut également utiliser le produit de réaction d'un dialkyldialcoxysilane sur un carboxylate d'étain comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

Parmi les agents de réticulation (D) on préfère plus particulièrement les alkyltrialcoxysilanes, les silicates d'alkyle et les polysilicates d'alkyle, dans lesquels les radicaux organiques sont des radicaux alkyles ayant de 1 à 4 atomes de carbone.

Les silicates d'alkyle peuvent être choisis parmi le silicate de méthyle, le silicate d'éthyle, le silicate d'isopropyle, le silicate de n-propyle, et les polysilicates choisis parmi les produits d'hydrolyse partielle de ces silicates ; ce sont des polymères constitués d'une proportion importante de motifs de formule (R⁴O)₃SiO_{0,5}, R⁴OSiO_{1,5}, (R⁴O)₂SiO et SiO₂ ; le symbole R⁴ représentant les radicaux méthyle, éthyle, isopropyle, n-propyle. Pour les caractériser on se base habituellement sur leur teneur en silice qui est établie par dosage du produit d'hydrolyse d'un échantillon.

On peut en particulier utiliser comme polysilicate, un silicate d'éthyle partiellement hydrolysé commercialisé sous la marque "Ethyl Silicate-40^{R} par Union Carbide Corporation, ou un silicate de propyle partiellement hydrolysé.

Les compositions selon l'invention peuvent être mises en formes, extrudées ou en particulier moulées suivant des formes variées, puis être durcies à température ambiante en un élastomère à l'humidité atmosphérique ou par addition d'eau. Un léger chauffage à une température de 20 à 150°C peut accélérer le durcissement.

De façon surprenante on a découvert que ces compositions de silicones réticulées présentent des caractéristiques physiques suffisantes pour les applications envisagées.

Un quatrième groupe de silicones utilisables selon l'invention concerne en effet une composition de silicone polyaddition durcissable en un élastomère par des réactions d'hydrosilylation, caractérisée en ce qu'elle comporte :
- - (A) :: au moins un organopolysiloxane présentant par molécule au moins deux groupes vinyle liés au silicium,
- - (B) :: au moins un organopolysiloxane présentant par molécule au moins trois atomes d'hydrogène liés au silicium,
- - (C) :: une quantité catalytiquement efficace d'un catalyseur qui est un composé d'un métal du groupe du platine.

Dans ce qui suit ou ce qui précède, sauf mentions contraires, les pourcentages et parties sont en poids.

Les quantités de (A) et (B) sont généralement choisies de manière que le rapport molaire des atomes d'hydrogène liés au silicium dans (B) aux radicaux vinyle liés au silicium dans (A) soit compris généralement entre 0,4 et 10, de préférence entre 0,6 et 5.

Les groupes vinyle dans (A) et les atomes d'hydrogène dans (B) sont généralement liés à des atomes de silicium différents.

Ces compositions réticulent par réaction d'addition (dénommée également réaction d'hydrosilylation), catalysée par un composé d'un métal du groupe du platine, d'un groupe vinyle de l'organopolysiloxane (A) sur une fonction hydrure de l'organopolysiloxane (D).

L'organopolysiloxane vinylé (1) peut être un organopolysiloxane présentant des motifs siloxyle de formule : 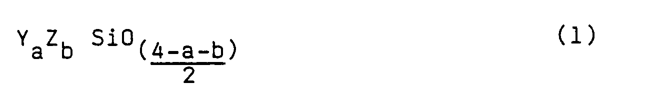
dans laquelle Y est un groupe vinyle, Z est un groupe hydrocarboné monovalent n'ayant pas d'action défavorable sur l'activité du catalyseur. Z est généralement choisi parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle, a est 1 ou 2, b est 0, 1, ou 2 et a + b est compris entre 1 et 3, éventuellement tous les autres motifs étant des motifs de formule moyenne : 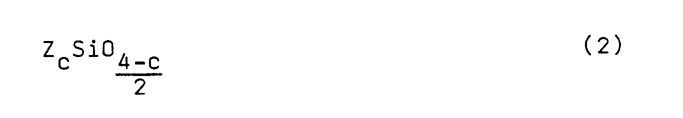
dans laquelle Z a la même signification que ci-dessus et c a une valeur comprise entre 0 et 3.

L'organopolysiloxane (B) peut être un organohydrogénopolysiloxane comportant des motifs siloxyle de formule : 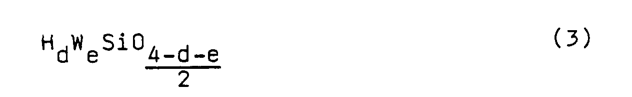
dans laquelle W est un groupe hydrocarboné monovalent n'ayant pas d'action défavorable sur l'activité du catalyseur et répondant à la même définition que Z, d est 1 ou 2, e est 0, 1 ou 2, d + e a une valeur comprise entre 1 et 3, éventuellement tous les autres motifs étant des motifs de formule moyenne : 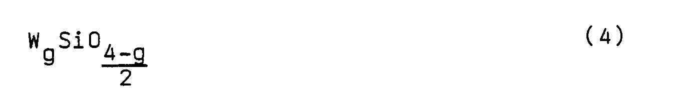
dans laquelle W a la même signification que ci-dessus, g à une valeur comprise entre 0 et 3. Toutes les valeurs limites de a, b, c, d, et g sont incluses.

L'organopolysiloxane (A) peut être uniquement formé de motifs de formule (1) ou peut contenir en outre des motifs de formule (2).

L'organopolysiloxane (A) peut présenter une structure linéaire ramifiée cyclique ou en réseau. Le degré de polymérisation est 2 ou plus et est généralement inférieur à 5 000. Par ailleurs, si l'organopolysiloxane (A) est linéaire, il présente une viscosité à 25°C inférieure à 500 000 mPa.s.

Z est généralement choisi parmi les radicaux méthyle, éthyle et phényle, 60 % molaire au moins des radicaux Z étant des radicaux méthyle.

Les organopolysiloxanes (A) et (B) sont bien connus et sont par exemple décrits dans les brevets US-A-3 220 972, US-A-3 284 406, US-A-3 436 366, US-A-3 697 473 et US-A-4 340 709.

Des exemples de motifs siloxyle de formule (1) sont le motif vinyldiméthylsiloxyle, le motif vinylphénylméthylsiloxyle, le motif vinylsiloxyle et le motif vinylméthylsiloxyle.

Des exemples de motifs siloxyle de formule (2) sont les motifs SiO_{4/2}, diméthylsiloxane, méthylphénylsiloxane, diphénylsiloxane, méthylsiloxane et phénylsiloxane.

Des exemples d'organopolysiloxane (A) sont les diméthylpolysiloxanes à extrémités diméthylvinylsiloxyle, les copolymères méthylvinyldiméthylpolysiloxanes à extrémités triméthylsiloxyle, les copolymères méthylvinyldiméthylpolysiloxanes à extrémités diméthylvinylsiloxyle, les méthylvinylpolysiloxanes cycliques.

L'organopolysiloxane (B) peut être uniquement formé de motifs de formule (3) ou comporte en plus des motifs de formule (4).

L'organopolysiloxane (B) peut présenter une structure linéaire ramifiée cyclique ou en réseau. Le degré de polymérisation est 2 ou plus et est généralement inférieur à 5 000.

Le groupe W a la même signification que le groupe Z ci-dessus.

Des exemples de motifs de formule (3) sont :

H(CH₃)₂SiO_{1/2}, HCH₃SiO_{2/2}, H(C₆H₅)SiO_{2/2};

Les exemples de motifs de formule (4) sont les mêmes que ceux donnés plus haut pour les motifs de formule (2).

Des exemples d'organopolysiloxane (B) sont :
- les diméthylpolysiloxanes à extrémités hydrogénodiméthylsilyle, les copolymères diméthylhydrogénométhylpolysiloxanes à extrémités triméthylsiloxyle, les copolymères diméthylhydrogénométhylpolysiloxanes à extrémités hydrogénodiméthylsiloxyle, les hydrogénométhylpolysiloxanes à extrémités triméthylsiloxyle, les méthylvinylpolysiloxanes cycliques.

Le rapport du nombre d'atomes d'hydrogène liés au silicium dans l'organopolysiloxane (B) sur le nombre de groupes à insaturation alcényle de l'organopolysiloxane (A) est compris entre 0,4 et 10, de préférence entre 0,6 et 5. Ce rapport peut être toutefois compris entre 2 et 5, si on souhaite faire des mousses d'élastomères.

L'organopolysiloxane (A) et/ou l'organopolysiloxane (2) peut être dilué dans un solvant organique non toxique compatible avec les silicones.

Les organopolysiloxanes (A) et (B) en réseau sont dénommés couramment résines silicones.

Les bases de compositions silicones polyaddition peuvent ne comporter que des organopolysiloxanes (1) et (2) linéaires comme par exemples celles décrites dans les brevets américains précités : US-A-3 220 972, US-A-3 697 473 et US-A-4 340 709, ou comporter à la fois des organopolysiloxanes (A) et (B) ramifiés ou en réseau comme par exemple celles décrites dans les brevets américains précités : US-A-3 284 406 et US-A-3 436 366.

Les catalyseurs (C) sont également bien connus.

On utilise de préférence les composés du platine et du rhodium.

On peut en particulier utiliser les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530, les complexes du platine et d'organopolysiloxane vinylé décrits dans les brevets américains : US-A-3 419 593, US-A-3 715 334, US-A-3 377 432 et US-A-3 814 730.

On peut en particulier utiliser les complexes du rhodium décrits dans les brevets britaniques : GB-A-1 421 136 et GB-A-1 419 769.

Le catalyseur généralement préféré est le platine.

Dans ce cas la quantité pondérale de catalyseur (C) calculée en poids de platine-métal est généralement comprise entre 2 et 600 ppm, en général entre 5 et 200 ppm basés sur le poids total des organopolysiloxanes (A) et (B).

Les compositions préférées, dans le cadre de la présente invention sont celles qui comportent :
- - (A) :: 100 parties d'une huile diorganopolysiloxane bloquée à chaque extrémité de sa chaîne par un motif vinyldiorganosiloxyle dont les radicaux organiques liés aux atomes de silicium sont choisis parmi les radicaux méthyle, éthyle et phényle, au moins 60 % molaire de ces radicaux étant des radicaux méthyle, de viscosité 100 à 500 000, de préférence de 1 000 à 200 000 mPa.s à 25°C,
- - (B) :: au moins un organohydrogénopolysiloxane choisi parmi les homopolymères et copolymères liquides linéaires ou en réseau présentant par molécule au moins 3 atomes d'hydrogène liés à des atomes de silicium différents et dont les radicaux organiques liés aux atomes de silicium sont choisis parmi les radicaux méthyle, éthyle et 60 % au moins de ces radicaux étant des radicaux méthyle, le produit (B) étant utilisé en quantité telle que le rapport molaire des fonctions hydrure sur les groupes vinyl sont compris entre 1,1 et 4,
- - (C) :: une quantité catalytiquement efficace d'un catalyseur au platine.

De façon encore plus préférée jusqu'à 50 % en poids du polymère (A) est remplacé par un copolymère en réseau comportant les motifs triméthylsiloxyle, méthylvinylsiloxyle et SiO_{4/2} dans lequel 2,5 à 10 % molaire des atomes de silicium comportent un groupe vinyle et dans lequel le rapport molaire des groupes triméthylsiloxyle au groupe SiO_{4/2} est compris entre 0,5 et 1.

Les compositions selon l'invention peuvent comporter en outre des charges (E) renforçantes ou semi-renforçantes ou de bourrage, qui sont de préférence choisies parmi les charges siliceuses.

Les charges renforçantes sont choisies parmi les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1 micromètre (um) et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les charges semi-renforçantes ou de bourrage ont un diamètre particulaire supérieur à 0,1 um et sont choisies de préférence parmi le quartz broyé, les argiles calcinées et les terres de diatomées.

On peut généralement utiliser de 5 à 100 parties, de préférence de 5 à 50 parties de charge (E) pour 100 parties de la somme des organopolysiloxanes (A) + (B).

Les compositions polyaddition sont généralement stockées en deux emballages. En effet elles réticulent dès qu'on mélange tous ces constituants. Si l'on veut retarder cette réticulation pour obtenir une bonne homogénéisation de la matière active, on peut ajouter à la composition un inhibiteur du catalyseur au platine. Ces inhibiteurs sont bien connus. On peut en particulier utiliser les amines organiques, les silazanes, les oximes organiques, les diesters de diacides carboxyliques, les alcools acétyléniques, les cétones acétyléniques, les vinylméthylcyclopolysiloxanes (voir par exemple US-A-3 445 420 et US-A-3 989 667). L'inhibiteur est utilisé à raison de 0,005 à 5 parties, de préférence 0,01 à 3 parties pour 100 parties du constituant (A).

Pour obtenir une bonne homogénéisation de répartition de la matière active, il est en effet souhaitable que la matrice silicone présente une certaine viscosité de l'ordre de 5 000 à 30 000 mPa.s à 25°C. Une telle viscosité peut être obtenue par une préréticulation, cette préréticulation étant bloquée à la viscosité désirée par addition d'un inhibiteur. On dispose ainsi de suffisamment de temps pour bien homogénéiser la matière active au sein de la matrice silicone. La réticulation est alors achevée par chauffage de la matrice à une température telle que l'inhibiteur n'a plus d'effet sur l'action catalytique du platine.

Les compositions selon l'invention peuvent être malaxées à froid telles quelles et être mises en formes, notamment moulées sous des formes variées.

Les quatre groupes de silicones décrits ci-dessus présentent la même propriété à savoir que lorsqu'ils contiennent une matière active sous forme hydrosoluble dispersée de façon uniforme, les compositions obtenues peuvent libérer la matière active de façon contrôlée dans un milieu non liquide notamment solide ou dans un milieu gazeux en particulier l'air ambiant éventuellement humide, puis dans la plante à traiter pendant une longue durée.

On a décrit des procédés de fabrication des compositions selon l'invention par mélanges intimes des bases polysiloxannes avec la matière active sous forme hydrosoluble, de préférence solide, puis fabrication de l'élastomère chargé. Cette dernière technique est préférée mais toute autre technique permettant d'obtenir ces compositions peut être utilisée.

Un système à libération contrôlée sous forme matricielle (matière active dissoute ou dispersée dans la matrice polymère) a une cinétique de libération normalement régie par la loi de FICK, c'est à dire par une cinétique de diffusion d'ordre 1/2 pour seulement 60 % en poids de matière active. Au-delà de 60 % il y a épuisement de la matrice et les flux de diffusion sont fortement diminués.

De façon surprenante et inattendue, on a trouvé que le système matriciel silicone selon l'invention libère la matière active suivant une cinétique d'ordre 0 et de façon continue et cela jusqu'à ce que 80 % en poids et plus de la matière active soit libéré.

L'avantage considérable apporté par la matrice silicone est donc qu'il est très facile d'extrapoler la diffusion continue de la matière active après une mesure de la quantité libérée représentant 10 à 15% de la matière initiale puisque l'on sait que la cinétique de diffusion est d'ordre 0 et qu'au moins 80 % de la matière active sera libéré suivant cette cinétique.

La composition selon l'invention comprenant la matière silicone contenant la matière active à l'état hydrosoluble peut se présenter à l'état solide rigide ou plus ou moins élastique. Elle peut se présenter sous des formes très variées en fonction des applications envisagées notamment de la matière active et la forme de la plante à traiter ainsi que du problème à résoudre.

Elle peut notamment se présenter sous forme de feuille, bande, bandelette qui peuvent être, selon un procédé de traitement qui fait également partie de l'invention, appliquées soit tout contre une partie quelconque de la plate à traiter soit à distance mais au voisinage de celle-ci dans une atmosphère gazeuse humide, de préférence dans l'air humide ou dans le sol.

Il peut être également avantageux d'utiliser la composition selon l'invention sous la forme d'éléments de petites dimensions de formes variées tels que des cubes, des parallélépipèdes rectangles, des cylindres, des sphères dont les paramètres fondamentaux sont les suivants :
- la nature de la matière active,
- le diamètre moyen (granulométrie) g des particules de la matière active dans le cas préféré où cette dernière est un solide,
- la teneur t de la matière active au sein de la matrice,
- le rapport R de la surface au volume de l'élément,
- et de manière générale selon la géométrie du système.
- et de manière générale selon la géométrie du système.

La nature de la matière active et sa granulométrie définissent sa vitesse de diffusion V à travers la matrice.

Plus g est petit et plus V est lent et inversement.

Plus t est grand et plus le flux de la matière active est élevé et inversement.

Plus R est grand et plus le flux élué de matière active est grand et inversement.

L'homme de métier par des expériences de routine peut, sans difficultés, aboutir rapidement au résultat visé en extrapolant le temps d'élution théorique qui correspondra au temps réel de diffusion de la matière active.

Comme matière active à action biologique agricole sous forme hydrosoluble, on peut citer des matières actives agrochimiques telles que les fongicides, bactéricides, algicides, molluscicides, insecticides, nématicides, herbicides, régulateurs de croissance ou encore des engrais ou fertilisants. Ces matières actives pour être utilisables selon l'invention doivent être hydrosolubles par nature ou rendue hydrosolubles par salification ou tout moyen équivalent.

Comme exemples de matière actives agrochimiques hydrosolubles par nature ou hydrosolubilisées, on peut citer des fongicides tels que les tris O-éthylphosphonates de sodium, de calcium ou d'aluminium (Phoséthyl-Al), des sels de l'acide phosphoreux, notamment les sels alcalins et alcalino-terreux, des régulateurs de croissance tels que les sels de l'acide chloro-2 éthyl phosphonique (éthephon), des herbicides tels que les acides phénoxy acétiques ou propioniques substitués comme les acides dichloro 2-4 phénoxy acétiques (2,4 D), chloro-2 méthyl-4 phénoxy acétique (MCPA), dichloro 2-4 phénoxy propionique -2 (2,4-DP), chloro-2 méthyl-4 phénoxy propionique-2 (MCPP ou mécoprop), et leurs sels alcalins, alcalino-terreux ou d'amines ou d'alcanol amines, les sels minéraux alcalins alcalino-terreux ou d'amines, ou d'alcanol amine de la N(phosphonométhyl)glycine (glyphosate), des halogénures de bipyridyldiylium (diquat et paraquat), des insecticides tels que l'aldoxycarbe.

Les exemples ci-après illustrent les compositions selon l'invention et leur application, sans que cette illustration limite la portée de l'invention.

### Exemple 1 :

### Préparation de la composante A

On homogénise a température ambiante dans un malaxeur, les constituants suivants :
a) 25 parties de résine silicone comportant 40 % molaire de motifs (CH₃)₃SiO_{1/2}, 6 % molaire de motifs (CH₃)(CH₂ = CH)SiO_{2/2} et 53,5 % de motif SiO_{4/2}.
b) 75 parties d'une huile diméthylpolysiloxane bloquée à chacune des extrémités de sa chaîne par un motif (CH₃)(CH₂ = CH)SiO_{1/2} de viscosité 3500 mPa.s à 25°C.
c) 40 ppm calculés en poids, de platine métal apporté par une solution à 0,25 % d'acide hexachloroplatinique préparée par agitation à température ambiante de 0,6 parties d'acide hexachloroplatinique, 10 parties d'isopropanol, 55 parties de xylène et 6 parties de tétraméthyl-1,1,3,3,divinyl-1,3 disiloxane.

### Préparation de la composante B

On homogénéise à température ambiante, dans un malaxeur, les constituants suivants :
d) 45 parties de résine silicone liquide hydrogénée, préparée par hydrolyse de silicate d'éthyle et de (CH₃)₂HSiCl en des
   quantités correspondant à un mole de SiO pour deux moles de (CH₃)₂ HSiCl en solution dans le toluène. Cette résine présente donc un rapport molaire théorique de motifs (CH₃) HSiO_{1/2} de 2 et un rapport molaire réel de
   2,23.
e) 12,5 parties de la résine a) de la partie (A)
f) 37,5 parties de l'huile vinylée b) de la partie (A).

La composition élastomère est obtenue par mélange de 10 parties de la composante A à 1 partie de la composante B.

### Préparation de la composition de l'exemple 1

On incorpore à 100 parties de la composition élastomère 25 parties de K2HPO3 de granulométrie moyenne comprise entre 100 et 160 microns. Le mélange est agité, sous vide, pendant 15 minutes pour le dégazage du mélange.

Le tout est ensuite coulé dans un moule préformé aux dimensions requises à savoir :
L = 5 cm
l = 2,5 cm
e = 0,4 cm
Le recuit est réalisé à 100°C pendant Ih30.

### Protocole expérimental de la mesure de la cinétique d'élution dans l'air :

Pour vérifier que le principe actif ainsi incorporé dans un élastomère silicone peut être dispensé dans le milieu gazeux ambiant, nous avons réalisé le test suivant :
La matrice est suspendue à l'aide d'une nacelle en inox dans un milieu confiné où une atmosphère de 100 % d'hygrométrie relative est maintenue. La libération est suivie par dosage du sel de phosphites dans la phase aqueuse (100 ml) contenue dans ledit récipient.

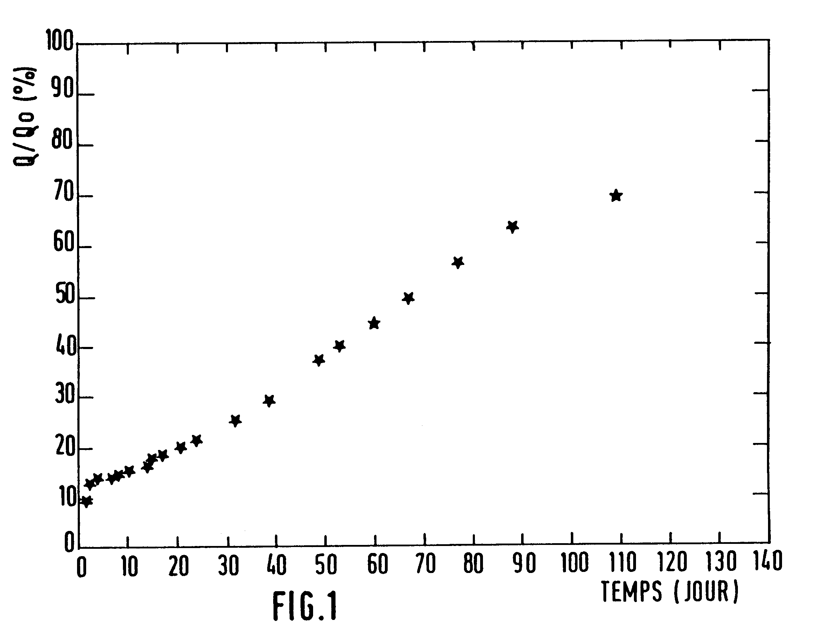

La courbe de libération contrôlée est reportée sur la figure 1 en annexe.

### Exemple 2 :

### Préparation de la composition

Composition : on mélange intimement à l'aide d'un malaxeur les ingrédients suivants :
- 100 parties d'une gomme (A)
   diméthylméthylvinylpolysiloxane bloquée à chacune de ses deux extrémités par un motif triméthylsiloxy et comprenant dans sa chaîne 99,8 % molaire de motif diméthylsiloxy et 0,2 % molaire de motifs vinylméthylsiloxy et de viscosité 10 millions de mPa.s à 25°C.
- 43,5 parties de charge (B) qui est un silice de combustion traité D4 (octaméthylcyclotetrasiloxane) de surface spécifique BET de 300 m²/g.
- 1 partie d'un diméthylpolysiloxane linéaire bloqué à ses deux extrémités par des groupements diméthylhydroxysiloxane de viscosité 50 mPa.s.
- 0,2 parties d'octométhyltétracyclosiloxane.
- 37,2 parties de K2HPO3 de granulométrie moyenne comprise entre 100 et 160 microns.

Le malaxage est arrêté 30 minutes après la fin de l'introduction de la silice. On enlève du malaxeur la composition homogène venant d'être préparée et qui est appelée le mélange maître (MM).

On transfère le MM sur un mélangeur à cylindre pour incorporer pour 100 parties de MM :
- 0,43 parties d'un méthylhydrogénosiloxane linéaire de viscosité 45 mPa.s à 25°C, bloqué à chaque extrémité de sa chaine par un motif triméthylsiloxy, comportant dans sa chaîne essentiellement des motifs hydrogénosiloxy,
- 0,6 partie d'un empâtage d'acide hexachloroplatinique titrant 0,18 % en poids de platine métal.

La composition catalysée se détache aisément des cylindres du mélangeur.

Elle est ensuite injectée sous pression de 5 000 à 20 000 psi dans un moule ayant les dimensions suivantes :
L = 10 cm
l = 10 cm
e = 0,4 cm
Le moule est préchauffé à 200°C. La réticulation a donc lieu en quelques secondes.

Des bandelettes de :
L = 5 cm
l = 2,5 cm
e = 0,4 cm
sont ensuite découpées pour le test de libération in vitro.

### Protocole expérimental de la mesure de la cinétique d'élution dans l'air

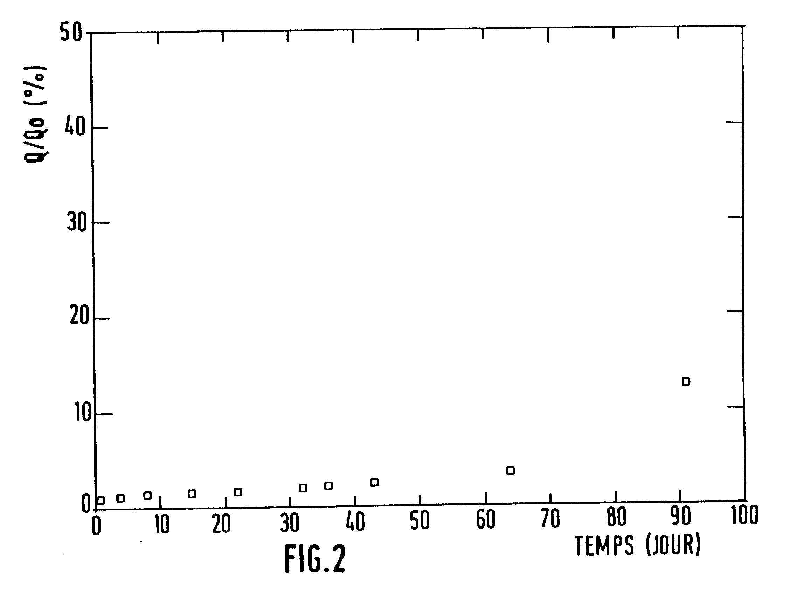

En opérant comme à l'exemple 1 avec la composition du présent exemple, on obtient la courbe de libération contrôlée sur la figure 2 en annexe.

### Exemple 3 :

On place sous forme de collier, à environ 3 cm du sol, autour de chaque tige de 7 plants de tomate en pot, variété Marmande âgés de 5 semaines, une bandelette silicone chargée de phosphite dipotassique telle que préparée à l'exemple 1. Les pots portant les plants sont placés dans une enceinte à 20°C et 90 % d'humidité relative. On constate que dans ces conditions il n'y a pas de ruissellement sur les plants. Au bout de 15 jours on prélève la partie du plant située au-dessus du collier puis, après enlèvement du collier, la partie entourée du collier et la partie inférieure, et on dose le phosphite dipotassique dans chacune des parties prélevées, en comparaison avec des plants témoins non traités.

L'analyse par chromatographie en phase gazeuse montre que sur les plants témoins on ne peut détecter de matière active (limite de détection 1mg/kg de poids frais), tandis que sur les plants traités la partie supérieure des plants contient en moyenne 154 mg/kg la partie en contact avec le collier contient 2600 mg/kg et la partie inférieure contient en moyenne 678 mg/kg de matière active rapporté au poids de plants frais .

### Exemple 4 :

### Préparation de la composition.

Composition : on mélange intimement à l'aide d'un malaxeur les ingrédients suivants :
- 100 parties d'une gomme (A) diméthylméthylvinylpolysiloxane bloquée à chacune de ses deux extrémités par un motif triméthylsiloxy et comprenant dans sa chaine 99,8% molaire de motif diméthylsiloxy et 0,2% molaire de motifs vinylméthylsiloxy et de viscosité 10 millions de mPa.s à 25°C.
- 43,5 parties de charge (B) qui est une silice de combustion traité D4 (octaméthylcyclotetrasiloxane) de surface spécifique BET de 300 m²/g
- 1 partie d'un diméthylpolysiloxane linéaire bloqué à ses deux extrémités par des groupements diméthylhydroxysiloxane de viscosité 50mPa.s
- 0,2 partie d'octométhyltétracyclosiloxane
- 43 parties d'éthylphosphite d'Aluminium micronisé
Le malaxage est arrêté 30 minutes après la fin de l'introduction de la silice. On enlève du malaxeur la composition homogène venant d'être préparée et qui est appelée le mélange maître (MM).

On transfère le MM sur un mélangeur à cylindres pour incorporer pour 100 parties de MM :
- 0,5 parties de diméthyl-2,5 di(tertiobutyle peroxy-2,5) hexane.

La composition catalysée se détache aisément des cylindres du mélangeur.

Elle est ensuite injectée sous pression de 5000 à 20 000 psi dans un moule ayant les dimensions suivantes :
L = 10 cm
l = 10 cm
e = 0,2 cm
Le moule est préchauffé à 200°C. La réticulation a donc lieu en quelques secondes.

Des bandelettes de :
L = 5 cm
l = 2,5 cm
e = 0,2 cm
sont ensuite découpées pour le test de libération in vitro

### Protocole expérimental de la mesure de la cinétique d'élution dans l'air

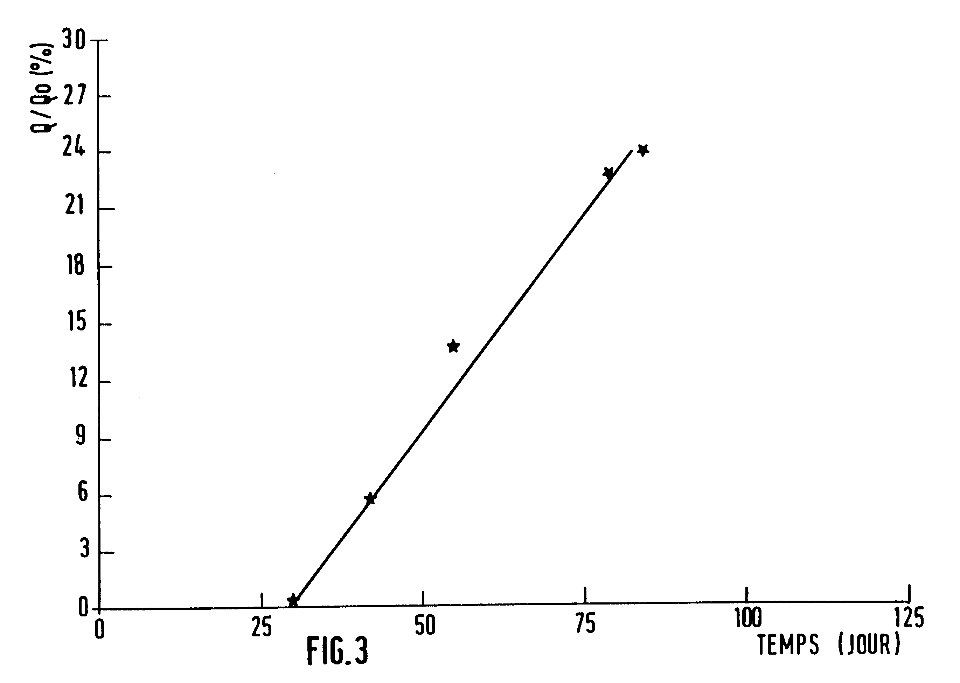

En opérant comme à l'exemple 1 avec la composition du présent exemple on obtient la courbe de libération contrôlée reportée en annexe figure 3.

### Exemples 5 à 7 :

On prépare trois compositions en forme de bandelette comme respectivement aux exemples 1, 2 et 4. si ce n'est que la matière active est remplacée par 43 parties de K₂SO₄ de granulométrie inférieure à 50 microns.

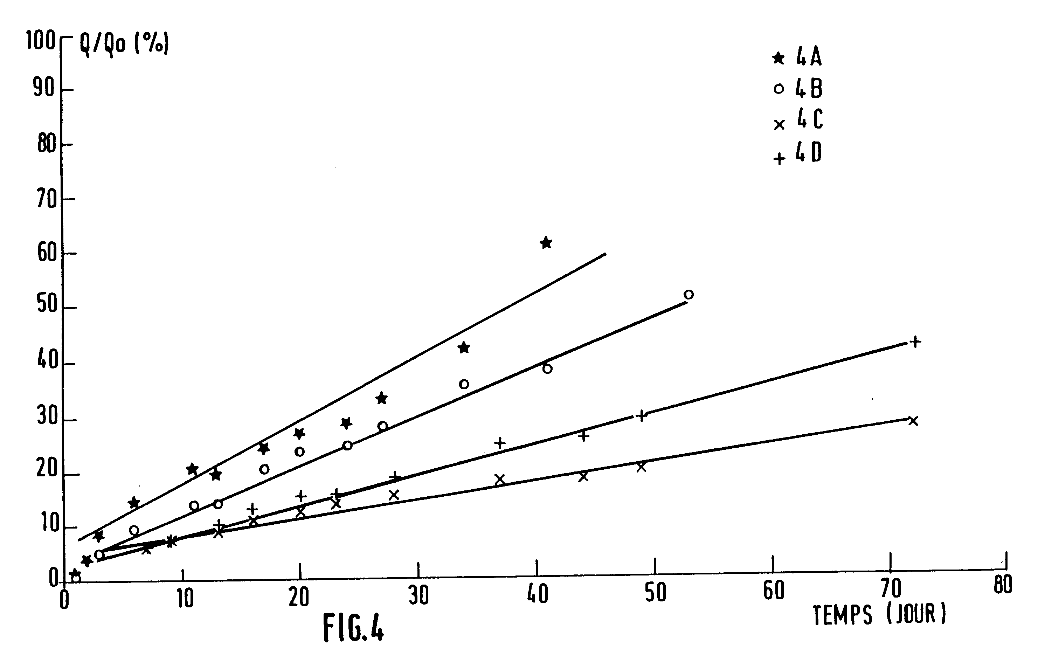

La cinétique d'élution dans l'air mesurée comme à l'exemple 1 dans les courbes de libération controlée reportées en annexe sur la figure 4 sous les n° 4A, 4B et 4C

### Exemple 8

On prépare un empâtage par malaxage de :
- 75 parties d'huile alpha-oméga-dihydroxyméthylpolysiloxane de viscosité 15.000 mPa.s à 25°C.
- 22,2 parties de célite (terre de diatomées)
- 2,3 parties de silicate de n-propyle.
- 0,5 partie d'un empâtage hydraté (mélange d'huile diméthylpolysiloxane et de silice de combustion) contenant 5% d'eau.

Le mélange est homogénéisé pendant 4 heurs puis filtré.

A 100 parties de cet empâtage on ajoute 43 parties de K₂SO₄ de granulométrie moyenne égale 50 microns.

On obtient un produit coulant que l'on catalyse par introduction de 0,5 g d'éthyl-2 hexanoate d'étain.

Le tout est ensuite coulé dans un moule préformé aux dimensions requises à savoir :
L = 5 cm
l = 2,5 cm
e = 0,2 cm
La réticulation est réalisée pendant 1h30

### Protocole expérimental de la mesure de la cinétique d'élution dans l'air :

En opérant comme à l'exemple 1 avec la composition du présent exemple on obtient la courbe de libération contôlée reportée en annexe sur la figure 4 sous le n° 4 D

## Revendications

1. Composition solide à base de polymère à action biologique agricole pour favoriser la croissance des plantes, caractérisée en ce qu'elle est constituée d'une quantité majoritaire d'une matière silicone, au moins partiellement réticulée ou non, perméable à la vapeur d'eau et d'une matière active à action biologique agricole sous forme hydrosoluble, dispersée de façon homogène dans la matière silicone et sans effet d'inhibition sur la réticulation du silicone, la matière silicone étant telle que la cinétique de libération de la matière active est sensiblement d'ordre zéro dans un milieu non liquide notamment solide ou dans un milieu gazeux humide, cette matière active étant présente à raison de 15 à 50 parties pour 100 parties d'organopolysiloxane de départ.

2. Composition selon la revendication 1, caractérisée en ce que la matière active est présente à raison de 15 à 40 parties en volume pour 100 parties en volume d'organopolysiloxanne.

3. Composition selon l'une des revendications 1 et 2, caractérisée en ce que la matrice silicone est une composition de silicone comportant (A) une gomme diorganopolysiloxane, (B) une charge renforçante (B₁) et/ou un peroxyde organique (B₂).

4. Composition de silicone selon la revendication 3, caractérisée en ce que le composé (B₁) est une charge renforçante siliceuse.

5. Composition selon l'une des revendications 3 et 4, caractérisée en ce qu'elle comporte :
- (A) : 100 parties en poids d'une gomme diorganopolysiloxane ayant une viscosité supérieure à 1 million mPa.s à 25°C,
- (B) : 5 à 130 parties en poids d'une charge siliceuse renforçante (B₁) choisie parmi les silices de pyrogénation et les silices de précipitation.

6. Composition selon l'une des revendications 3 à 5, caractérisée en ce que la gomme (A) a pour formule générale R₃₋ₐ(R′O)ₐSiO(R₂SiO)ₙSi(OR′)ₐR₃₋ₐ dans laquelle les symboles R, identiques ou différents, représentent des radicaux hydrocarbonés en C₁-C₈, subsitutés ou non par des atomes d'halogène, des radicaux cyano ; le symbole R′ représente un atome d'hydrogène, un radical alkyle en C₁-C₄, le symbole a représente zéro ou un, le symbole n représente un nombre ayant une valeur suffisante pour obtenir une viscosité d'au moins 1 Million de mPa.s à 25°C, au moins 50 % en nombre de radicaux représentés par R sont des radicaux méthyle.

7. Composition selon la revendication 6, caractérisée en ce que de préférence 0,005 à 0,5 mole % des motifs entrant dans la constitution de la gomme (A) sont choisis parmi ceux de formules (CH₂=CH)(R)SiO et (CH₂=CH)R₂₋ₐ(RO′)ₐSi_{0,5}.

8. Composition selon l'une des revendications 3 à 7, caractérisée en ce qu'elle comporte en outre de 0,1 à 6 parties d'un agent de texturation (D) qui est un polymère organofluoré sous forme d'un solide pulvérulent.

9. Composition selon l'une des revendications 3 à 8, caractérisée en ce qu'elle comporte en outre, en plus d'une charge renforçante (B₁), de 0,1 à 6 parties (B₂) d'un péroxyde organique.

10. Composition selon la revendication 9, caractérisée en ce que jusqu'à 90 % en poids de la charge silicone renforçante (B₁) est remplacée par des charges semi-renforçantes ou de bourrage.

11. Composition selon l'une des revendications 3, 9 et 10, durcie en un élastomère par chauffage.

12. Composition selon l'une des revendications 1 et 2, caractérisée en ce que la matrice silicone est une composition de silicone vulcanisable à chaud comportant (A) une gomme diorganopolysiloxane, présentant par molécule au moins deux groupes vinyle liés au silicium et une viscosité à 25°C d'au moins 500 000 mPa.s, (B) au moins un organohydrogénopolysiloxane présentant par molécule au moins trois atomes d'hydrogène liés au silicum, (C) une charge renforçante, et (D) une quantité catalytiquement efficace d'un catalyseur qui est un composé d'un métal du groupe du platine.

13. Composition de silicone selon la revendication 12, caractérisée en ce que le composé (C) est une charge renforçante siliceuse.

14. Composition selon l'une des revendications 12 et 13, caractérisée en ce qu'elle comporte :
- (A) : 100 parties en poids d'une gomme diorganopolysiloxane présentant par molécule au moins deux groupes vinyle liés au silicium et une viscosité à 25°C d'au moins 500 000 mPa.s,
- (B) : au moins un organohydrogénopolysiloxane présentant par molécule au moins trois atomes d'hydrogène liés au silicum en quantité telle que le rapport en nombre des fonctions hydrures de (B) sur les groupes vinyle de (A) soit compris entre 0,4 et 10,
- (C) : 5 à 130 parties en poids d'une charge renforçante de préférence siliceuse choisie parmi les silices de pyrogénation et les silices de précipitation,
- (D) : une quantité catalytiquement efficace d'un catalyseur qui est un composé d'un métal du groupe du platine.

15. Composition selon l'une des revendications 12 à 14, caractérisée en ce que la gomme (A) a pour formule générale R₃₋ₐ(R′O)ₐSiO(R₂SiO)ₙSi(OR′)ₐR₃₋ₐ dans laquelle les symboles R, identiques ou différents, représentent des radicaux hydrocarbonés en C₁-C₈, subsitutés ou non par des atomes d'halogène, des radicaux cyano ; le symbole R′ représente un atome d'hydrogène, un radical alkyle en C₁-C₄, le symbole a représente zéro ou un, le symbole n représente un nombre ayant une valeur suffisante pour obtenir une viscosité d'au moins 1 Million de mPa.s à 25°C, au moins 50 % en nombre de radicaux représentés par R sont des radicaux méthyle.

16. Composition selon la revendication 15, caractérisée en ce que de préférence 0,005 à 0,5 mole % des motifs entrant dans la constitution de la gomme (A) sont choisis parmi ceux de formules (CH₂=CH)(R)SiO et (CH₂=CH)R₂₋ₐ(RO′)ₐSi_{0,5}.

17. Composition selon l'une des revendications 12 à 16, caractérisée en ce qu'elle comporte de 0,1 à 6 parties d'un organohydrogénopolysiloxane (B) présentant un motif siloxane de formula générale moyenne : 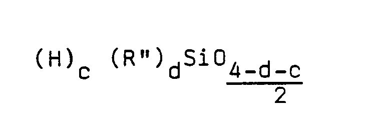 dans laquelle R˝ représente des radicaux méthyle, phényle et vinyle, 50 % au moins de ces radicaux étant des radicaux méthyle, c représente un nombre quelconque de 0,01 à 1 inclus et d représente un nombre quelconque de 0,01 à 2 inclus.

18. Composition selon l'une quelconque des revendications 12 à 17, caractérisée en ce que les organohydrogénopolysiloxanes sont choisis parmi les polymères linéaires, ramifiés ou cycliques, constitués de motifs choisis parmi ceux de formules :
R˝₂SiO, H(R˝)SiO, H(R˝)₂SiO_{0,5}, HSiO_{1,5},
R˝SiO_{1,5} SiO₂, R˝SiO_{0,5}
et sont ajoutés en quantité telle que le rapport en nombre des fonctions hydrure de (B) sur les groupes vinyle (A) soit compris entre 1,1 et 4.

19. Composition selon l'une quelconque des revendications 12 à 18, caractérisée en ce que jusqu'à 90 % en poids de la charge siliceuse renforçante (C) est remplacée par des charges semi-renforçantes ou de bourrage.

20. Composition selon l'une quelconque des revendications 12 à 19, caractérisée en ce qu'elle est durcie en un élastomère par chauffage.

21. Composition selon l'une des revendications 1 et 2, caractérisée en ce que la matrice est une composition de diorganopolysiloxanes durcissables en un élastomère de silicone par des réaction de polycondensation, caractérisée en ce qu'il comporte :
- (A) : au moins une huile diorganopolysiloxane portant à chaque extrémité de la chaîne au moins deux groupes condensables ou hydrolysables, ou un seul groupe hydroxy,
- (B) : un catalyseur de polycondensation de l'huile,
- (C) : un silane comportant au moins trois groupes condensables ou hydrolysables, quand (A) est une huile à extrémités hydroxy.

22. Composition selon la revendication 21, caractérisée en ce que le diorganopolysiloxanes (A) répond à la formule générale (1) :
YₙSi₃₋ₙO(SiR₂O)ₓSiR₃₋ₙYₙ (1)
dans laquelle :
R représente des radicaux hydrocarbonés monovalents identiques ou différents, Y représente des groupes hydrolysables ou condensables identiques ou différents, ou des groupes hydroxy,
n est choisi parmi 1, 2 et 3 avec n = 1 quand Y est un hydroxy, et x est un nombre entier supérieur à 1, de préférence supérieur à 10.

23. Composition selon la revendication 22, caractérisée en ce que le radical R est choisi parmi les radicaux alkyle en C₁-C₈, vinyle, phényle et trifluoro-3,3,3 propyle, au moins 60 % en nombre des radicaux R étant des radicaux méthyle.

24. Composition selon l'une des revendications 22 et 23 carctérisée en ce que Y est choisi parmi les groupes amino, acylamino, aminoxy, cétiminoxy, iminoxy, enoxy, alcoxy, alcoxy-alkylenoxy, acyloxy et phosphate.

25. Composition selon l'une des revendications 21 à 24 caractérisée en ce qu'elle comporte un silane (D) dans le cas où les groupes condensables ou hydrolysables ne sont pas des groupes hydroxy et en ce que le silane (D) répond à la formule :
R₄₋ₐSi Y′a (2)
dans laquelle R est un radical hydrocarboné monovament, Y′ représente des groupes hydrolysables ou condensables, identiques ou différents, et a est égal à 3 ou 4.

26. Composition selon l'une des revendications 21 à 25 caractérisée en ce qu'elle est monocomposante.

27. Composition selon l'une des revendications 21 à 25 caractérisée en ce qu'elle est bi-composante.

28. Composition selon la revendication 27, caractérisée en ce qu'elle comporte :
- (A) : 100 parties en poids d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, jusqu'à 20 % en nombre étant des radicaux phényle, au plus 2 % étant des radicaux vinyle,
- (B) : 0,01 à 1 partie (calculée en poids d'étain métal) d'un composé catalytique de l'étain,
- (C) : 0,5 à 15 parties d'un polyalcoxysilane ou polyalcoxysiloxane,
- (D) : 0 à 100 parties, de préférence 5 à 50 parties de charge minérale siliceuse.

29. Composition selon l'une des revendications 1 et 2, caractérisée en ce que la matrice silicone est une composition de silicone polyaddition durcissable en un élastomère par des réactions d'hydrosilylation, caractérisée en ce qu'elle comporte :
- (A) : au moins un organopolysiloxane présentant par molécule au moins deux groupes vinyle liés au silicium
- (B) : au moins un organopolysiloxane présentant par molécule au moins trois atomes d'hydrogène liés au silicum,
- (C) : une quantité catalytiquement efficace d'un catalyseur qui est un composé d'un métal du groupe du platine.

30. Composition selon la revendication 29, caractérisée en ce que le rapport molaire des atomes d'hydrogène liés au silicium dans (B) aux radicaux vinyle liés au silicium dans (A) soit compris entre 0,4 et 10.

31. Composition selon l'une des revendications 29 et 30 caractérisée en ce qu'elle comporte :
- A) au moins un organopolysiloxane présentant des motifs siloxyle de formule : 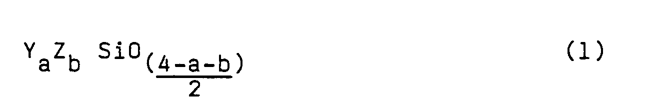 dans laquelle Y est un groupe vinyle, Z est un groupe hydrocarboné monovalent n'ayant pas d'action défavorable sur l'activité du catalyseur, a est 1 ou 2, b est 0, 1, ou 2 et a + b est compris entre 1 et 3, éventuellement tous les autres motifs étant des motifs de formule moyenne : 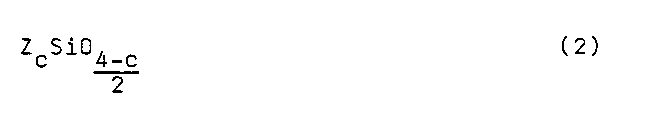 dans laquelle Z a la même signification que ci-dessus et c a une valeur comprise entre 0 et 3.
- B) au moins un organopolysiloxane comportant des motifs siloxyle de formule : 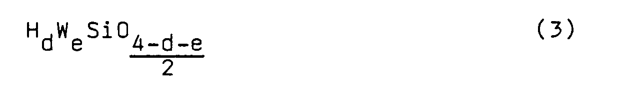 dans laquelle W répond à la même définition que ci-dessus pour Z, d est 1 ou 2, e est 0, 1 ou 2, d + e a une valeur comprise entre 1 et 3, éventuellement tous les autres motifs étant des motifs de formule moyenne : 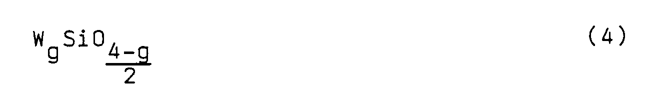 dans laquelle W a la même signification que ci-dessus et g a une valeur comprise entre 0 et 3.
- C) une quantité catalytiquement efficace d'un composé du platine.

32. Composition selon l'une des revendications 29 à 31 caractérisée en ce qu'elle comporte :
- (A) : 100 parties d'une huile diorganopolysiloxane bloquée à chaque extrémité de sa chaîne par un motif vinyldiorganosiloxyle dont les radicaux organiques liés aux atomes de silicium sont choisis parmi les radicaux méthyle, éthyle et phényle, au moins 60 % molaire de ces radicaux étant des radicaux méthyle de viscosité 100 à 500 000 mPa.s à 25°C,
- (B) : au moins un organohydrogénopolysiloxane choisi parmi les homopolymères et copolymères liquides linéaires ou en réseau présentant par molécule au moins 3 atomes d'hydrogène liés à des atomes de silicium différents et dont les radicaux organiques liés aux atomes de silicium sont choisis parmi les radicaux méthyle, éthyle et 60 % au moins de ces radicaux étant des radicaux méthyle, le produit (B) étant utilisé en quantité telle que le rapport molaire des fonctions hydrure sur les groupes vinyle sont compris entre 1,1 et 4,
- (C) : une quantité catalytiquement efficace d'un catalyseur au platine.

33. Composition selon la revendication 32, caractérisée en ce que 50 % en poids du polymère (A) est remplacé par un copolymère en réseau comportant les motifs triméthylsiloxyle, méthylvinylsiloxyle et SiO_{4/2} dans lequel 2,5 et 10 % molaire des atomes de silicium comportent un groupe vinyle et dans lequel le rapport molaire des groupes triméthylsiloxyle au groupe SiO_{4/2} est compris entre 0,5 et 1.

34. Composition selon l'une des revendications 29 à 33, caractérisée en ce qu'elle comporte en outre de 5 à 100 parties de charges siliceuses renforçantes ou semi-renforçantes pour 100 parties de la somme des organopolysiloxanes (A) + (B).

35. Composition selon l'une des revendications 29 à 34, précédentes durcie en un élastomère.

36. Composition selon l'une des revendications 1 à 35, caractérisée en ce que la matière active est par nature hydrosoluble.

37. Composition selon l'une des revendications 1 à 36, caractérisée en ce que la matière active est fongicide.

38. Composition selon l'une des revendications 1 à 36, caractérisée en ce que la matière active est insecticide.

39. Composition selon l'une des revendications 1 à 36, caractérisée en ce que la matière active est herbicide.

40. Composition selon l'une des revendications 1 à 36, caractérisée en ce que la matière active est régulateur de la croissance des plantes.

41. Composition selon l'une des revendications 1 à 36, caractérisée en ce que la matière active est un engrais.

42. Composition selon la revendication 37, caractérisée en ce que la matière active est l'acide phosphoreux ou l'un de ses sels minéraux ou organiques.

43. Composition selon la revendication 37, caractérisée en ce que la matière active est le tris O-éthyl phosphonate d'aluminium.

44. Procédé de traitement des plantes avec une matière à action biologique agricole caractérisée selon l'une des revendications 1 à 43.

45. Procédé de traitement selon la revendication 44, caractérisée en ce que la composition est appliquée contre tout ou partie de la plante pendant un temps suffisant à l'apport d'une quantité efficace de matière active.

46. Procédé de traitement selon la revendication 44, caractérisée en ce que la composition est placée au voisinage de la plante pendant un temps suffisant à l'apport d'une quantité efficace de matière active.

47. Procédé de traitement selon la revendication 46, caractérisée en ce que la composition et la plante ou partie de la plante à traiter sont dans un milieu gazeux humide

48. Procédé de traitement selon la revendication 46 caractérisée en ce que la composition et la plante sont dans un milieu solide, de préférence le sol.

## Claims

1. Solid polymer-based agricultural composition with biological action for promoting the growth of plants, characterised in that it comprises a majority quantity of a silicone material, which is at least partly crosslinked or not crosslinked, and permeable to water vapour, and of an active agricultural material with biological action in a water-soluble form, dispersed in a homogeneous manner in the silicone material, and which has no inhibiting effect on the crosslinking of the silicone, the silicone material being such that the liberation kinetics of the active material are approximately of the zero order in a non-liquid, in particular a solid, medium, or in a damp gaseous medium, this active material being present in a proportion of 15 to 50 parts per 100 parts of starting organopolysiloxane.

2. Composition according to Claim 1, characterised in that the active material is present in a proportion of 15 to 40 parts by volume per 100 parts by volume of organopolysiloxane.

3. Composition according to one of Claims 1 and 2, characterised in that the silicone matrix is a silicone composition containing (A) a diorganopolysiloxane gum, (B) a reinforcing filler (B₁) and/or an organic peroxide (B₂).

4. Silicone composition according to Claim 3, characterised in that compound (B₁) is a reinforcing siliceous filler.

5. Composition according to one of Claims 3 and 4, characterised in that it comprises:
- (A): 100 parts by weight of a diorganopolysiloxane gum with a viscosity greater than 1 million mPa.s at 25°C,
- (B): 5 to 130 parts by weight of a reinforcing siliceous filler (B₁) chosen from pyrolysed silicas and precipitated silicas.

6. Composition according to one of Claims 3 to 5, characterised in that the gum (A) has the general formula R₃₋ₐ(R'O)ₐSiO(R₂SiO)ₙSi(OR')ₐR₃₋ₐ in which the symbols R, which may be identical or different, represent C₁-C₈ hydrocarbon radicals, which may be substituted by halogen atoms or cyano radicals; the symbol R' represents a hydrogen atom or a C₁-C₄ alkyl radical, the symbol a represents zero or 1, the symbol n represents a number having a value which is sufficient to obtain a viscosity of at least 1 million mPa.s at 25°C, and at least 50% of the number of radicals represented by R are methyl radicals.

7. Composition according to Claim 6, characterised in that preferably 0.005 to 0.5 mol% of the residues going to make up the gum (A) are chosen from those of formulae (CH₂=CH)(R)SiO and (CH₂=CH)R₂₋ₐ(RO')ₐSi_{0.5}.

8. Composition according to one of Claims 3 to 7, characterised in that it contains in addition from 0.1 to 6 parts of a texturising agent (D) which is an organofluorinated polymer in the form of a powdery solid.

9. Composition according to one of Claims 3 to 8, characterised in that it contains in addition, as well as a reinforcing filler (B₁), from 0.1 to 6 parts of an organic peroxide (B₂).

10. Composition according to Claim 9, characterised in that up to 90% by weight of the reinforcing silicone filler (B₁) is replaced by semi-reinforcing or packing fillers.

11. Composition according to one of Claims 3, 9 and 10, hardened into an elastomer by heating.

12. Composition according to one of Claims 1 and 2, characterised in that the silicone matrix is a hot-vulcanisable silicone composition containing (A) a diorganopolysiloxane gum having, per molecule, at least two vinyl groups bonded to the silicon and a viscosity at 25°C of at least 500,000 mPa.s, (B) at least one organohydropolysiloxane having, per molecule, at least three hydrogen atoms bonded to the silicon, (C) a reinforcing filler, and (D) a catalytically effective quantity of a catalyst which is a compound of a metal of the platinum group.

13. Silicone composition according to Claim 12, characterised in that compound (C) is a reinforcing siliceous filler.

14. Composition according to one of Claims 12 and 13, characterised in that it contains:
- (A): 100 parts by weight of a diorganopolysiloxane gum having, per molecule, at least two vinyl groups bonded to the silicon and a viscosity at 25°C of at least 500,000 mPa.s,
- (B): at least one organohydropolysiloxane having, per molecule, at least 3 hydrogen atoms bonded to the silicon, in such a quantity that the numerical ratios of the hydride functions of (B) to the vinyl groups of (A) is between 0.4 and 10,
- (C): 5 to 130 parts by weight of a reinforcing filler, preferably siliceous, chosen from pyrolysed silicas and precipitated silicas,
- (D): a catalytically effective quantity of a catalyst which is a compound of a metal of the platinum group.

15. Composition according to one of Claims 12 to 14, characterised in that the gum (A) has the general formula R₃₋ₐ(R'O)ₐSiO(R₂SiO)ₙSi(OR')ₐR₃₋ₐ in which the symbols R, which may be identical or different, represent C₁-C₈ hydrocarbon radicals, which may be substituted by halogen atoms or cyano radicals; the symbol R' represents a hydrogen atom or a C₁-C₄ alkyl radical, the symbol a represents zero or one, the symbol n represents a number having a sufficient value to obtain a viscosity of at least 1 million mPa.s at 25°C, and at least 50% in number of the radicals represented by R are methyl radicals.

16. Composition according to Claim 15, characterised in that preferably 0.005 to 0.5 mol% of the residues making up the gum (A) are chosen from those of formulae (CH₂=CH)(R)SiO and (CH₂=CH)R₂₋ₐ(RO')ₐSi_{0.5}.

17. Composition according to one of Claims 12 to 16, characterised in that it contains from 0.1 to 6 parts of an organohydropolysiloxane (B) having a siloxane residue of mean general formula: 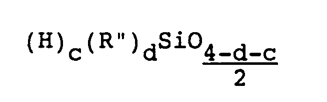 in which R'' represents methyl, phenyl and vinyl radicals, 50% at least of these radicals being methyl radicals, c represents any number from 0.01 to 1 inclusive and d represents any number from 0.01 to 2 inclusive.

18. Composition according to any one of Claims 12 to 17, characterised in that the organohydropolysiloxanes are chosen from the linear, branched or cyclic polymers constituted of residues chosen from those of formulae: R''₂SiO, H(R'')SiO, H(R'')₂SiO_{0.5}, HSiO_{1.5}, R''SiO_{1.5}SiO₂ , R''SiO_{0.5} and are added in a quantity such that the numerical ratio of the hydride functions of (B) to the vinyl groups (A) is between 1.1 and 4.

19. Composition according to any one of Claims 12 to 18, characterised in that up to 90% by weight of the reinforcing siliceous filler (C) is replaced by semi-reinforcing or packing fillers.

20. Composition according to any one of Claims 12 to 19, characterised in that it is hardened into an elastomer by heating.

21. Composition according to one of Claims 1 and 2, characterised in that the matrix is a composition of diorganopolysiloxanes which are hardenable into a silicone elastomer by polycondensation reactions, and characterised in that it contains:
- (A): at least one diorganopolysiloxane oil having, at each end of the chain, at least two condensable or hydrolysable groups, or a single hydroxy group,
- (B): a polycondensation catalyst for the oil,
- (C): a silane containing at least three condensable or hydrolysable groups, when (A) is an oil with hydroxy ends.

22. Composition according to Claim 21, characterised in that the diorganopolysiloxane (A) corresponds to general formula (1):
YₙSi₃₋ₙO(SiR₂O)ₓSiR₃₋ₙYₙ (1)
in which:
R represents monovalent hydrocarbon radicals, which may be identical or different, Y represents hydrolysable or condensable groups, which may be identical or different, or hydroxy groups,
n is chosen from 1, 2 and 3 with n = 1 when Y is a hydroxy, and x is an integer greater than 1, preferably greater than 10.

23. Composition according to Claim 22, characterised in that the radical R is chosen from the C₁-C₈ alkyl, vinyl, phenyl and 3,3,3-trifluoropropyl radicals, at least 60% in number of the R radicals being methyl radicals.

24. Composition according to one of Claims 22 and 23, characterised in that Y is chosen from the amino, acylamino, aminoxy, ketiminoxy, iminoxy, enoxy, alkoxy, alkoxy-alkyleneoxy, acyloxy and phosphate groups.

25. Composition according to one of Claims 21 to 24, characterised in that contains a silane (D) in the case in which the condensable or hydrolysable groups are not hydroxy groups, and in which the silane (D) corresponds to formula:
R₄₋ₐSiY'a (2)
in which R is a monovalent hydrocarbon radical, Y' represents hydrolysable or condensable groups, which may be identical or different, and a is equal to 3 or 4.

26. Composition according to one of Claims 21 to 25, characterised in that it is a monocomponent composition.

27. Composition according to one of Claims 21 to 25, characterised in that it is a bi-component composition.

28. Composition according to Claim 27, characterised in that it contains:
- (A): 100 parts by weight of an alpha-omega-dihydroxy-diorganopolysiloxane oil of viscosity from 50 to 300,000 mPa.s, the organic radicals of which are chosen from the methyl, ethyl, vinyl, phenyl and 3,3,3-trifluoropropyl radicals, at least 60% in number being methyl radicals, up to 20% in number being phenyl radicals and at most 2% being vinyl radicals,
- (B): 0.01 to 1 part (calculated as weight of tin metal) of a catalytic tin compound,
- (C): 0.5 to 15 parts of a polyalkoxysilane or polyalkoxysiloxane,
- (D): 0 to 100 parts, preferably 5 to 50 parts of a siliceous inorganic filler.

29. Composition according to one of Claims 1 and 2, characterised in that the silicone matrix is a polyaddition silicone composition which is hardenable to an elastomer by hydrosilylation reactions, which contains:
- (A): at least one organopolysiloxane having, per molecule, at least two vinyl groups bonded to the silicon,
- (B): at least one organopolysiloxane having, per molecule, at least three hydrogen atoms bonded to the silicon,
- (C): a catalytically effective quantity of a catalyst which is a compound of a metal of the platinum group.

30. Composition according to Claim 29, characterised in that the molar ratio of the hydrogen atoms bonded to the silicon in (B) to the vinyl radicals bonded to the silicon in (A) is between 0.4 and 10.

31. Composition according to one of Claims 29 and 30, characterised in that it contains:
- A) at least one organopolysiloxane containing siloxyl residues of formula: 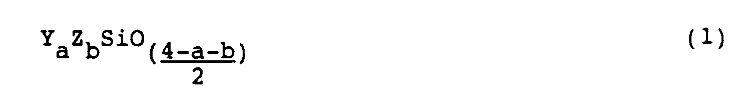 in which Y is a vinyl group, Z is a monovalent hydrocarbon group which has no unfavourable action on the activity of the catalyst, a is 1 or 2, b is 0, 1 or 2 and a + b is between 1 and 3, optionally all the other residues being residues of mean formula: 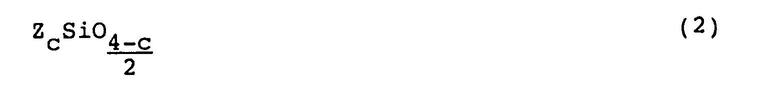 in which Z has the same meaning as above and c has a value of between 0 and 3.
- B) at least one organopolysiloxane containing siloxyl residues of formula: 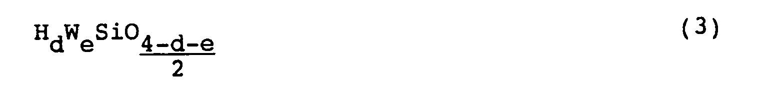 in which W corresponds to the same definition as above for Z, d is 1 or 2, e is 0, 1 or 2 and d + e has a value of between 1 and 3, optionally all the other residues being residues of mean formula: 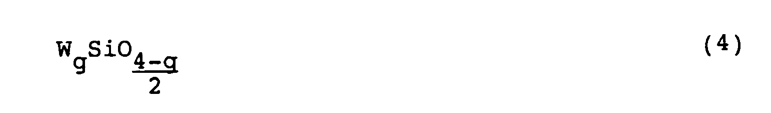 in which W has the same meaning as above and g has a value of between 0 and 3.
- C): a catalytically effective quantity of a platinum compound.

32. Composition according to one of Claims 29 to 31, characterised in that it contains:
- (A): 100 parts of a diorganopolysiloxane oil terminated at each end of its chain by a vinyldiorganosiloxyl residue in which the organic radicals bonded to the silicon atoms are chosen from the methyl, ethyl and phenyl radicals, at least 60 mol% of these radicals being methyl radicals, of viscosity 100 to 500,000 mPa.s at 25°C
- (B): at least one organohydropolysiloxane chosen from the liquid linear or net-like homopolymers and copolymers having, per molecule, at least 3 hydrogen atoms bonded to different silicon atoms and in which the organic radicals bonded to the silicon atoms are chosen from the methyl and ethyl radicals and 60% at least of these radicals being methyl radicals, the product (B) being used in a quantity such that the molar ratio of the hydride functions on the vinyl groups is between 1.1 and 4,
- (C): a catalytically effective quantity of a platinum catalyst.

33. Composition according to Claim 32, characterised in that 50% by weight of the polymer (A) is replaced by a net-like copolymer containing trimethylsiloxyl, methylvinylsiloxyl and SiO_{4/2} residues in which 2.5 and 10 mol% of the silicon atoms carry a vinyl group, and in which the molar ratio of the trimethylsiloxyl groups to the SiO_{4/2} groups is between 0.5 and 1.

34. Composition according to one of Claims 29 to 33, characterised in that it contains in addition from 5 to 100 parts of reinforcing or semi-reinforcing siliceous fillers per 100 parts of the sum of the organopolysiloxanes (A) + (B).

35. Composition according to one of the preceding Claims 29 to 34, which has hardened into an elastomer.

36. Composition according to one of Claims 1 to 35, characterised in that the active material is water-soluble by nature.

37. Composition according to one of Claims 1 to 36, characterised in that the active material is a fungicide.

38. Composition according to one of Claims 1 to 36, characterised in that the active material is an insecticide.

39. Composition according to one of Claims 1 to 36, characterised in that the active material is a herbicide.

40. Composition according to one of Claims 1 to 36, characterised in that the active material is a plant growth regulator.

41. Composition according to one of Claims 1 to 36, characterised in that the active material is a manure.

42. Composition according to Claim 37, characterised in that the active material is phosphorous acid or one of its inorganic or organic salts.

43. Composition according to Claim 37, the active material is aluminium tris-O-ethylphosphonate.

44. Process for the treatment of plants with a biologically active agricultural material characterised according to one of Claims 1 to 43.

45. Treatment process according to Claim 44, characterised in that the composition is applied to all or part of the plant for sufficient time for the supply of an effective quantity of active material.

46. Treatment process according to Claim 44, characterised in that the composition is placed in the neighbourhood of the plant for sufficient time for the supply of an effective quantity of active material.

47. Treatment process according to Claim 46, characterised in that the composition and the plant or part of the plant to be treated are in a damp gaseous medium.

48. Treatment process according to Claim 46, characterised in that the composition and the plant are in a solid medium, preferably soil.

## Patentansprüche

1. Feste Zusammensetzung auf Polymerbasis mit landwirtschaftlicher biologischer Wirkung zur Förderung des Pflanzenwachstums, dadurch gekennzeichnet, daß sie besteht aus einer übergeordneten Menge eines mindestens partiell vernetzten oder unvernetzten, gegenüber Wasserdampf durchlässigen Silikonmaterials und einem Wirkstoff mit landwirtschaftlicher biologischer Wirkung in wasserlöslicher Form, das homogen im Silikonmaterial dispergiert ist und keine Hemmwirkung auf die Vernetzung des Silikons hat, wobei das Silikonmaterial so beschaffen ist, daß die Kinetik der Freisetzung des Wirkstoffs in einem nicht-flüssigen, insbesondere festen Medium oder einem gasförmigen feuchten Medium etwa 0. Ordnung ist, wobei der Wirkstoff in einem Anteil von 15 bis 50 Teilen pro 100 Teile des Ausgangsorganopolysiloxans vorliegt.

2. Zusammensetzung nach Anspruch 1, dadurch gekennzeichnet, daß der Wirkstoff in einem Anteil von 15 bis 40 Volumenteilen pro 100 Volumenteile des Organopolysiloxans vorliegt.

3. Zusammensetzung nach einem der Ansprüche 1 und 2, dadurch gekennzeichnet, daß es sich beim Matrix-Silikon um eine Silikonzusammensetzung handelt, die (A) einen Diorganopolysiloxan-Kautschuk, (B) einen verstärkenden Füllstoff (B₁) und/oder ein organisches Peroxid (B₂) enthält.

4. Silikonzusammensetzung nach Anspruch 3, dadurch gekennzeichnet, daß es sich beim Bestandteil (B₁) um einen verstärkenden siliciumdioxidhaltigen Füllstoff handelt.

5. Zusammensetzung nach einem der Ansprüche 3 und 4, dadurch gekennzeichnet, daß sie folgende Bestandteile enthält:
(A): 100 Gewichtsteile eines Diorganopolysiloxans-Kautschuks mit einer Viskosität von mehr als 1 Million mPa.s bei 25°C und
(B): 5 bis 130 Gewichtsteile eines verstärkenden siliciumdioxidhaltigen Füllstoffs (B₁) der unter pyrogenen Siliciumdioxid-Produkten und durch Fällung erhaltenen Siliciumdioxid-Produkten ausgewählt ist.

6. Zusammensetzung nach einem der Ansprüche 3 bis 5, dadurch gekennzeichnet, daß der Kautschuk (A) die allgemeine Formel R₃₋ₐ(R'0)ₐSiO(R₂SiO)ₙSi(OR')ₐR₃₋ₐ aufweist, in der die Symbole R, die gleich oder verschieden sind, C₁-C₈-Kohlenwasserstoffreste bedeuten, die gegebenenfalls durch Halogenatome und Cyanogruppen substituiert sind, das Symbol R' ein Wasserstoffatom oder einen C₁-C₄ Alkylrest bedeutet, das Symbol a den Wert 0 oder 1 hat und das Symbol n eine Zahl bedeutet, die ausreicht, eine Viskosität von mindestens 1 Million mPa.s bei 25°C zu erzielen, wobei es sich bei mindestens 50 % der Anzahl der durch R wiedergegebenen Reste um Methylreste handelt.

7. Zusammensetzung nach Anspruch 6, dadurch gekennzeichnet, daß vorzugsweise 0,005 bis 0,5 Mol-% der Bestandteile im Kautschuk (A) unter den Formeln (CH₂=CH)(R)SiO und (CH₂=CH)R₂₋ₐ(R'O)ₐSi_{0,5} ausgewählt sind.

8. Zusammensetzung nach einem der Ansprüche 3 bis 7, dadurch gekennzeichnet, daß sie ferner 0,1 bis 6 Teile eines Texturierungsmittels (D) enthält, bei dem es sich um ein Organofluorpolymer in Form eines pulverförmigen Feststoffs handelt.

9. Zusammensetzung nach einem der Ansprüche 3 bis 8, dadurch gekennzeichnet, daß sie ferner neben dem verstärkenden Füllstoff (B₁) 0,1 bis 6 Teile (B₂) eines organischen Peroxids enthält.

10. Zusammensetzung nach Anspruch 9, dadurch gekennzeichnet, daß bis zu 90 Gew.-% des verstärkenden silciumdioxidhaltigen Füllstoffs (B₁) durch halbverstärkende oder Bourrage-Füllstoffe ersetzt sind.

11. Zusammensetzung nach einem der Ansprüche 3, 9 und 10, gehärtet in einem Elastomeren durch Erwärmen.

12. Zusammensetzung nach einem der Ansprüche 1 und 2, dadurch gekennzeichnet, daß es sich bei dem Matrix-Silikon um eine wärmevulkanisierbare Silikonzusammensetzung handelt, die (A) einen Diorganopolysiloxan-Kautschuk, der pro Molekül mindestens zwei an Silicium gebundene Vinylgruppen aufweist und eine Viskosität bei 25°C von mindestens 500 000 mPa.s besitzt, (B) mindestens ein Organohydrogenpolysiloxan, das pro Molekül mindestens drei an Silicium gebundene Wasserstoffatome aufweist, (C) einen verstärkenden Füllstoff und (D) eine katalytisch wirksame Menge eines Katalysators, bei dem es sich um eine Verbindung eines Metalls der Platingruppe handelt, enthält.

13. Silikonzusammensetzung nach Anspruch 12, dadurch gekennzeichnet, daß es sich beim Bestandteil (C) um einen verstärkenden siliciumdioxidhaltigen Füllstoff handelt.

14. Zusammensetzung nach einem der Ansprüche 12 und 13, dadurch gekennzeichnet, daß sie folgende Bestandteile enthält:
(A): 100 Gewichtsteile eines Diorganopolysiloxan-Kautschuks, der pro Molekül mindestens zwei an Silicium gebundene Vinylgruppen aufweist und eine Viskosität bei 25°C von mindestens 500 000 mPa.s besitzt,
(B): mindestens ein Organohydrogensiloxan, das pro Molekül mindestens drei an Silicium gebundene Wasserstoffatome aufweist, in einer solchen Menge, daß das Zahlenverhältnis der Wasserstoffunktionen von (B) zu den Vinylgruppen von (A) 0,4 bis 10 beträgt,
(C): 5 bis 130 Gewichtsteile eines verstärkenden Füllstoffs, vorzugsweise eines siliciumdioxidhaltigen Materials, das unter pyrogenen Siliciumdioxid-Produkten und durch Fällung erhaltenen Siliciumdioxid-Produkten ausgewählt ist, und
(D): eine katalystisch wirksame Menge eines Katalysators, bei dem es sich um eine Verbindung eines Metalls der Platingruppe handelt.

15. Zusammensetzung nach einem der Ansprüche 12 bis 14, dadurch gekennzeichnet, daß der Kautschuk (A) die allgemeine Formel R₃₋ₐ(R'0)ₐSiO(R₂SiO)ₙSi(OR')ₐR₃₋ₐ aufweist, in der die Symbole R, die gleich oder verschieden sind, C₁-C₈-Kohlenwasserstoffreste bedeuten, die gegebenenfalls durch Halogenatome und Cyanogruppen substituiert sind, das Symbol R' ein Wasserstoffatom oder einen C₁-C₄ Alkylrest bedeutet, das Symbol a den Wert 0 oder 1 hat und das Symbol n eine Zahl bedeutet, die ausreicht, eine Viskosität von mindestens 1 Million mPa.s bei 25°C zu erzielen, wobei es sich bei mindestens 50 % der Anzahl der durch R wiedergegebenen Reste um Methylreste handelt.

16. Zusammensetzung nach Anspruch 15, dadurch gekennzeichnet, daß vorzugsweise 0,005 bis 0,5 Mol-% der Struktureinheiten Bestandteile im Kautschuk (A) unter den Formeln (CH₂=CH)(R)SiO und (CH₂=CH)R₂₋ₐ(R'O)ₐSi_{0,5} ausgewählt sind.

17. Zusammensetzung nach einem der Ansprüche 12 bis 16, dadurch gekennzeichnet, daß sie 0,1 bis 6 Teile eines Organohydrogenpolysiloxans (B) enthält, das eine Siloxan-Struktureinheit der durchschnittlichen allgemeinen Formel aufweist 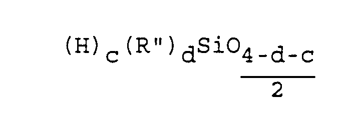 in der R'' einen Methyl-, Phenyl- oder Vinylrest bedeutet, wobei es sich bei mindestens 50 % dieser Reste um Methylreste handelt, c eine beliebige Zahl von 0,01 bis einschließlich 1 bedeutet und d eine beliebige Zahl von 0,01 bis einschließlich 2 bedeutet.

18. Zusammensetzung nach einem der Ansprüche 12 bis 17, dadurch gekennzeichnet, daß die Organohydrogenpolysiloxane unter linearen, verzweigten oder cyclischen Polymeren ausgewählt sind, deren Struktureinheiten unter folgenden Formeln ausgewählt sind:
R''₂SiO, H(R'')SiO, H(R'')₂SiO_{0,5}, HSiO_{1,5},
R''SiO_{1,5} SiO₂ und R''SiO_{0,5}
und in einer solchen Menge zugesetzt sind, daß das Zahlenverhältnis der Wasserstoffunktionen von (B) zu den Vinylgruppen (A) 1,1 bis 4 beträgt.

19. Zusammensetzung nach einem der Ansprüche 12 bis 18, dadurch gekennzeichnet, daß bis zu 90 % des verstärkenden siliciumdioxidhaltigen Füllstoffs durch halbverstärkende Füllstoffe oder Bourrage-Füllstoffe ersetzt sind.

20. Zusammensetzung nach einem der Ansprüche 12 bis 19, dadurch gekennzeichnet, daß sie in einem Elastomeren durch Erwärmen gehärtet ist.

21. Zusammensetzung nach einem der Ansprüche 1 und 2, dadurch gekennzeichnet, daß es sich bei der Matrix um eine Zusammensetzung von durch Polykondensationsreaktionen in einem Silikon-Elastomeren härtbaren Diorganopolysiloxanen handelt, und daß sie folgende Bestandteile enthält:
(A): mindestens ein Diorganopolysiloxan-Öl, das an jedem Kettenende mindestens zwei kondensierbare oder hydrolysierbare Gruppen oder eine einzelne Hydroxylgruppe aufweist,
(B): einen Polykondensationskatalysator für das Öl und
(C): ein Silan, das mindestens drei kondensierbare oder hydrolysierbare Gruppen trägt, wenn es sich bei (A) um ein Öl mit terminalen Hydroxylgruppen handelt.

22. Zusammensetzung nach Anspruch 21, dadurch gekennzeichnet, daß die Diorganopolysiloxane (A) die allgemeine Formel (1) aufweisen:
YₙSi₃₋ₙO(SiR₂O)ₓSiR₃₋ₙYₙ
in der
R gleiche oder verschiedene, einwertige Kohlenwasserstoffreste bedeutet, Y gleiche oder verschiedene, hydrolysierbare oder kondensierbare Gruppen oder Hydroxylgruppen bedeutet, n unter den Werten 1, 2 und 3 ausgewählt ist, wobei n = 1, wenn Y eine Hydroxylgruppe bedeutet, und x eine ganze Zahl >1 und vorzugsweise >10 bedeutet.

23. Zusammensetzung nach Anspruch 22, dadurch gekennzeichnet, daß der Rest R unter C₁-C₈-Alkyl-, Vinyl, Phenyl- und 3,3,3-Trifluorpropylresten ausgewählt ist, wobei es sich bei mindestens 60 % der Anzahl der Reste R um Methylreste handelt.

24. Zusammensetzung nach einem der Ansprüche 22 und 23, dadurch gekennzeichnet, daß Y unter Amino-, Acylamino-, Aminoxy-, Ketiminoxy-, Iminoxy-, Enoxy-, Alkoxy-, Alkoxyalkylenoxy-, Acyloxy- und Phosphatgruppen ausgewählt ist.

25. Zusammensetzung nach einem der Ansprüche 21 bis 24, dadurch gekennzeichnet, daß sie in dem Fall, daß es sich bei den kondensierbaren oder hydrolysierbaren Gruppen nicht um Hydroxylgruppen handelt, ein Silan (D) enthält, das die folgende Formel aufweist:
R₄₋ₐSiY'a (2)
in der R einen einwertigen Kohlenwasserstoffrest bedeutet, Y' gleiche oder verschiedene, hydrolysierbare oder kondensierbare Gruppen bedeutet und a einen Wert von 3 oder 4 hat.

26. Zusammensetzung nach einem der Ansprüche 21 bis 25, dadurch gekennzeichnet, daß sie einkomponentig ist.

27. Zusammensetzung nach einem der Ansprüche 21 bis 25, dadurch gekennzeichnet, daß sie zweikomponentig ist.

28. Zusammensetzung nach Anspruch 27, dadurch gekennzeichnet, daß sie folgende Bestandteile enthält:
(A): 100 Gewichtsteile eines alpha-omega-Dihydroxydiorganopolysiloxan-Öls mit einer Viskosität von 50 bis 300 000 mPa.s, deren organische Reste unter Methyl-, Ethyl-, Vinyl-, Phenyl- und 3,3,3-Trifluorpropylresten ausgewählt sind, wobei es sich bei mindestens 60 % der Anzahl der Reste um Methylreste, bei bis zu 20 % um Phenylreste und bei mehr als 2 % um Vinylreste handelt,
(B): 0,01 bis 1 Teil (berechnet als Gewicht des Zinnmetalls) einer katalytischen Zinnverbindung,
(C): 0,5 bis 15 Teile eines Polyalkoxysilans oder Polyalkoxysiloxans und
(D): 0 bis 100 Teile und vorzugsweise 5 bis 50 Teile eines anorganischen siliciumdioxidhaltigen Füllstoffs.

29. Zusammensetzung nach einem der Ansprüche 1 und 2, dadurch gekennzeichnet, daß es sich beim Matrix-Silikon um Silikon handelt, das durch Polyaddition in einem Elastomeren durch Hydrosilylierungsreaktionen härtbar ist, und daß sie folgende Bestandteile enthält:
(A): mindestens ein Organopolysiloxan, das pro Molekül mindestens zwei an Silicium gebundene Vinylgruppen aufweist,
(B): mindestens ein Organopolysiloxan, das pro Molekül mindestens 3 an Silicium gebundene Wasserstoffatome aufweist,
(C): eine katalytisch wirksame Menge eines Katalysators, bei dem es sich um eine Verbindung eines Metalls der Platingruppe handelt.

30. Zusammensetzung nach Anspruch 29, dadurch gekennzeichnet, daß das Molverhältnis der an Silicium gebundenen Wasserstoffatome in (B) zu den an Silicium gebundenen Vinylresten in (A) 0,4 bis 10 beträgt.

31. Zusammensetzung nach einem der Ansprüche 29 und 30, dadurch gekennzeichnet, daß sie folgende Bestandteile enthält:
(A): mindestens ein Organopolysiloxan mit Siloxyl-Struktureinheiten der Formel 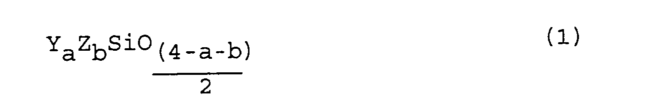 in der Y einen Vinylrest bedeutet, Z einen einwertigen Kohlenwasserstoffrest bedeutet, der keine ungünstige Wirkung auf die Katalysatoraktivität ausübt, a den Wert 1 oder 2 hat, b den Wert 0, 1 oder 2 hat und a+b 1 bis 3 beträgt, wobei gegebenenfalls sämtliche übrigen Struktureinheiten die folgende durchschnittliche Formel aufweisen: 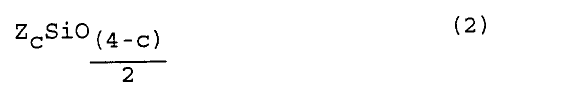 in der Z die vorstehend angegebene Bedeutung hat und c einen Wert von 0 bis 3 hat,
(B): mindestens ein Organopolysiloxan mit Siloxyl-Struktureinheiten der Formel 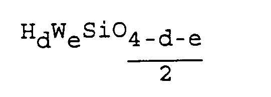 in der W die vorstehend für Z angegebene Definition besitzt, d den Wert 1 oder 2 hat, e den Wert 0, 1 oder 2 hat und d+e einen Wert von 1 bis 3 hat, wobei es sich gegebenenfalls bei sämtlichen übrigen Struktureinheiten um solche der folgenden durchschnittlichen Formel handelt 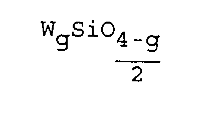 in der W die vorstehend angegebene Bedeutung hat und g einen Wert von 0 bis 3 hat, und
(C): eine katalytisch wirksame Menge einer Platinverbindung.

32. Zusammensetzung nach einem der Ansprüche 29 bis 31, dadurch gekennzeichnet, daß sie folgende Bestandteile enthält:
(A): 100 Teile eines Diorganopolysiloxan-Öls, das an jedem seiner Kettenenden mit einer Vinyldiorganosiloxyl-Struktureinheit blockiert ist, deren organische, an Siliciumatome gebundene Reste unter Methyl-, Ethyl- und Phenylresten ausgewählt sind, wobei es sich bei mindestens 60 Mol-% dieser Reste um Methylreste handelt und wobei das Öl eine Viskosität von 100 bis 500 000 mPa.s bei bei 25°C aufweist,
(B) mindestens ein Organohydrogenpolysiloxan, das unter flüssigen Homopolymeren und Copolymeren, die linear oder vernetzt sind, ausgewählt ist, die pro Molekül mindestens drei an unterschiedliche Siliciumatome gebundene Wasserstoffatome aufweisen und deren an Siliciumatome gebundene organische Reste unter Methyl- und Ethylresten ausgewählt sind, wobei es sich bei mindestens 60 % dieser Reste um Methylreste handelt, wobei das Produkt (B) in einer solchen Menge verwendet wird, daß das Molverhältnis der Wasserstoffunktionen zu den Vinylgruppen 1,1 bis 4 beträgt, und
(C) eine katalytisch wirksame Menge eines Platinkatalysators.

33. Zusammensetzung nach Anspruch 32, dadurch gekennzeichnet, daß 50 Gew.-% des Polymeren (A) durch ein vernetztes Copolymeres ersetzt sind, das die Struktureinheiten Trimethylsiloxyl, Methylvinylsiloxyl und SiO_{4/2} aufweist, worin 2,5 bis 10 Mol-% der Siliciumatome eine Vinylgruppe aufweisen und das Molverhältnis der Trimethylsiloxylgruppen zu den SiO_{4/2}-Gruppen 0,5 bis 1 beträgt.

34. Zusammensetzung nach einem der Ansprüche 29 bis 33, dadurch gekennzeichnet, daß sie ferner 5 bis 100 Teile verstärkende oder halbverstärkende siliciumdioxidhaltige Füllstoffe pro 100 Teile der Summe der Organopolysiloxane (A) + (B) enthält.

35. Zusammensetzung nach einem der Ansprüche 29 bis 34, gehärtet in einem Elastomeren.

36. Zusammensetzung nach einem der Ansprüche 1 bis 35, dadurch gekennzeichnet, daß der Wirkstoff von Natur aus wasserlöslich ist.

37. Zusammensetzung nach einem der Ansprüche 1 bis 36, dadurch gekennzeichnet, daß es sich beim Wirkstoff um ein Fungizid handelt.

38. Zusammensetzung nach einem der Ansprüche 1 bis 36, dadurch gekennzeichnet, daß es sich beim Wirkstoff um ein Insektizid handelt.

39. Zusammensetzung nach einem der Ansprüche 1 bis 36, dadurch gekennzeichnet, daß es sich beim Wirkstoff um ein Herbizid handelt.

40. Zusammensetzung nach einem der Ansprüche 1 bis 36, dadurch gekennzeichnet, daß es sich beim Wirkstoff um einen Pflanzenwuchsregler handelt.

41. Zusammensetzung nach einem der Ansprüche 1 bis 36, dadurch gekennzeichnet, daß es sich beim Wirkstoff um ein Düngemittel handelt.

42. Zusammensetzung nach Anspruch 37, dadurch gekennzeichnet, daß es sich beim Wirkstoff um phosphorige Säure oder eines ihrer anorganischen oder organischen Salze handelt.

43. Zusammensetzung nach Anspruch 37, dadurch gekennzeichnet, daß es sich beim Wirkstoff um Aluminium-tris-O-ethylphosphonat handelt.

44. Verfahren zur Behandlung von Pflanzen mit einem landwirtschaftlichen biologischen Wirkstoff, der in einem der Ansprüche 1 bis 43 gekennzeichnet ist.

45. Verfahren zur Behandlung nach Anspruch 44, dadurch gekennzeichnet, daß die Zusammensetzung auf die gesamte Pflanze oder einen Teil davon für einen ausreichend langen Zeitraum angewandt wird, um eine wirksame Menge des Wirkstoffs aufzubringen.

46. Verfahren nach Anspruch 44, dadurch gekennzeichnet, daß die Zusammensetzung in der Nähe der Pflanze für einen ausreichend langen Zeitraum ausgebracht wird, um eine wirksame Menge des Wirkstoffs aufzubringen.

47. Behandlungsverfahren nach Anspruch 46, dadurch gekennzeichnet, daß die Zusammensetzung und die zu behandelnde Pflanze oder ein Teil davon sich in einem gasförmigen, feuchten Medium befinden.

48. Behandlungsverfahren nach Anspruch 46, dadurch gekennzeichnet, daß sich die Zusammensetzung und die Pflanze in einem festen Medium, vorzugsweise Erdreich, befinden.
